(19) Europäisches Patentamt
European Patent Office
Office européen des brevets

(11) EP 4 644 464 A1

(12) **EUROPEAN PATENT APPLICATION**
published in accordance with Art. 153(4) EPC

(43) Date of publication:
**05.11.2025 Bulletin 2025/45**

(21) Application number: **23945675.9**

(22) Date of filing: **23.11.2023**

(51) International Patent Classification (IPC):
***C08G 69/40*** *(2006.01)* ***C08G 69/48*** *(2006.01)*
***H01M 4/62*** *(2006.01)* ***H01M 4/36*** *(2006.01)*
***H01M 4/13*** *(2010.01)* ***H01M 10/05*** *(2010.01)*

(52) Cooperative Patent Classification (CPC):
Y02E 60/10; Y02E 60/50

(86) International application number:
**PCT/CN2023/133752**

(87) International publication number:
**WO 2025/015796 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.07.2023 CN 202310864261**

(71) Applicant: **Contemporary Amperex Technology Co., Limited**
**Ningde, Fujian 352100 (CN)**

(72) Inventor: **LI, Hanghao**
**Ningde, Fujian 352100 (CN)**

(74) Representative: **Laufhütte, Dieter**
**Lorenz Seidler Gossel**
**Rechtsanwälte Patentanwälte**
**Partnerschaft mbB**
**Widenmayerstraße 23**
**80538 München (DE)**

# (54) POLYMER, PREPARATION METHOD, DISPERSING AGENT, POSITIVE ELECTRODE SLURRY, POSITIVE ELECTRODE PLATE, SECONDARY BATTERY, AND ELECTRICAL APPARATUS

(57) The present application provides a polymer, a preparation method, a dispersant, a positive electrode slurry, a positive electrode plate, a secondary battery, and a power consuming apparatus. The polymer includes a structure expressed by formula (I), where X includes at least one of a carboxyl group, an ester group, a sulfo group, a sulfonate group, a phospho group, and a phosphate group; X' includes a non-polar group; and L includes a structural unit expressed by formula (II), where $R_1$ includes a $C_{1-12}$ alkylene group, a $C_{6-12}$ arylene group or formula (A), $R_2$ includes a $C_{1-12}$ alkylene group, a $C_{6-12}$ arylene group or formula (B), and $R_3$ includes hydrogen or a $C_{1-3}$ alkyl group, where EO represents $-CH_2-CH_2-O-$, PO represents $-CH(CH_3)-CH_2-O-$, m1 and m2 are each independently an integer between 3 and 60, and n1 and n2 are each independently an integer between 0 and 60.

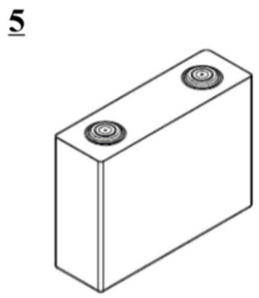

FIG. 1



Processed by Luminess, 75001 PARIS (FR)

## Description

### CROSS-REFERENCE TO RELATED APPLICATIONS

The present application claims priority to Chinese Patent Application No. 202310864261.7, filed on July 14, 2023 and entitled "POLYMER, PREPARATION METHOD, DISPERSANT, POSITIVE ELECTRODE SLURRY, POSITIVE ELECTRODE PLATE, SECONDARY BATTERY, AND POWER CONSUMING APPARATUS", which is incorporated herein by reference in its entirety.

### TECHNICAL FIELD

The present application relates to the technical field of secondary batteries, and in particular, to a polymer, a preparation method, a dispersant, a positive electrode slurry, a positive electrode plate, a secondary battery, and a power consuming apparatus.

### BACKGROUND

In recent years, secondary batteries have been widely used in energy storage power systems such as water power stations, thermal power stations, wind power stations, and solar power stations, and in multiple fields such as electric tools, electric bicycles, electric motorcycles, electric vehicles, military equipment, and aerospace.

Positive electrode plate, as a main component of a secondary battery, directly affects the application performance of the secondary battery. A positive electrode plate is generally composed of a current collector, a positive electrode active material, a conductive agent, and a binder. However, the positive electrode active material is generally a nano-scale material with a larger specific surface area, resulting in higher surface activity. In a homogenization process of the positive electrode slurry, agglomeration is prone to occur, consequently forming larger aggregates, affecting the coating effect of the electrode, making the conductivity of the prepared electrode plate low, and directly affecting the electrochemical performance of the battery. In the related art, a dispersant is generally added to improve the dispersibility of the slurry. However, the dispersant in the related art is not suitable for slurry systems containing positive electrode active materials with different graphitization degrees produced through different processes. The universality of the dispersant in the related art is poor, which is not conducive to reducing the manufacturing cost. Therefore, it is necessary to develop a new dispersant suitable for slurry systems containing positive electrode active materials produced through different processes.

### SUMMARY

The present application is carried out in view of the above subject, and its purpose is to provide a polymer, which is used as a dispersant to adapt to positive electrode active materials with different graphitization degrees, thereby improving the dispersibility of slurry systems containing positive electrode active materials with different graphitization degrees, effectively increasing the solid content of the slurry, slowing down the gel phenomenon of the slurry, reducing the film resistance of the electrode plate, improving the flexibility of the electrode plate, and improving the first coulombic efficiency and high temperature cycling performance of the battery.

According to a first aspect, the present application provides a polymer, which includes a structure expressed by formula I,

$$X'-L-X \quad \text{formula I,}$$

where

- X includes at least one of a carboxyl group, an ester group, a sulfo group, a sulfonate group, a phospho group, and a phosphate group;
- X' includes a non-polar group; and
- L includes a structural unit expressed by formula II,

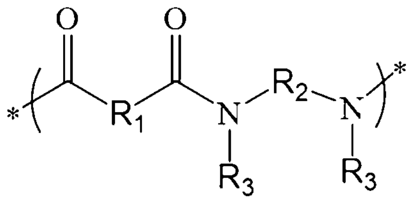

formula II,

where

$R_1$ includes a $C_{1-12}$ alkylene group, a $C_{6-12}$ arylene group or

$$*\!-\!\left(\mathrm{EO}\right)_{m1}\!-\!\left(\mathrm{PO}\right)_{n1}\!-\!*$$ ,

$R_2$ includes a $C_{1-12}$ alkylene group, a $C_{6-12}$ arylene group or

$$*\!-\!\left(\mathrm{EO}\right)_{m2}\!-\!\left(\mathrm{PO}\right)_{n2}\!-\!*$$ ,

and $R_3$ includes hydrogen or a $C_{1-3}$ alkyl group, where EO represents $-CH_2-CH_2-O-$, PO represents $-CH(CH_3)-CH_2-O-$, m1 and m2 are each independently an integer between 3 and 60, and n1 and n2 are each independently an integer between 0 and 60.

An end group at one end of the polymer includes a non-polar group and exhibits lipophilicity, while an end group at the other end includes at least one of a carboxyl group, an ester group, a sulfo group, a sulfonate group, a phospho group, and a phosphate group, and exhibits polarity and hydrophilicity. After adding the polymer to a slurry system, the carboxyl group, the ester group, the sulfo group, the sulfonate group, the phospho group or the phosphate group at one end, acting as an anchoring point, is adsorbed on a surface of a solid particle, while the non-polar group at the other end is suspended in the slurry to form a three-dimensional barrier. When solid particles get close to each other, this three-dimensional barrier will generate a strong repulsive force, prevent particle aggregation, and form a uniformly-dispersed stable slurry. Moreover, an amide group contained in the structural unit expressed by formula II is a polar group and can generate a strong intermolecular induction force, thereby further improving the dispersion effect of the polymer. In addition, L chain segments contain fewer branches, bond angles are relatively fixed, a certain linear structure is presented in the slurry system, the chain segments are completely stretched in the slurry system, the chain segments are not easily entangled, and the spatial hindrance generated thereby fully isolates the solid particles, thereby further improving the dispersion effect.

In addition, the structural unit expressed by formula II in each L chain segment contains an amide group. Due to a p-$\pi$ conjugation effect, lone pair charges of an oxygen atom and a nitrogen atom on the amide group may delocalize to a C-N single bond. Moreover, the amide group, as a carboxylic acid derived group, may undergo enol interconversion under acidic or alkaline conditions. Its $\alpha$-C and carbonyl carbon may produce instantaneous double bonds, so the entire L chain segment contains some double bond properties, and the L chain segment tends to be linear, which may reduce the slip resistance between the positive electrode active materials in a cold pressing process, play a role of increasing the flexibility of the electrode plate, and improve the flexibility of the electrode plate.

To sum up, compared with the existing dispersant, the polymer dispersant in the present application has broad versatility and is suitable for slurry systems containing positive electrode active materials with different graphitization degrees. Compared with the existing dispersant, the present application improves the dispersibility of the polymer through the combined action of the X group, the amide group, and the L chain segment at the ends, improves the dispersibility of the polymer, improves the applicability of the polymer dispersant to positive electrode active materials with different graphitization degrees, and helps to reduce the preparation cost and improve the production efficiency.

In any of embodiments, the polymer includes at least one of structures expressed by formula I-1, formula I-2, formula I-3, and formula I-4,

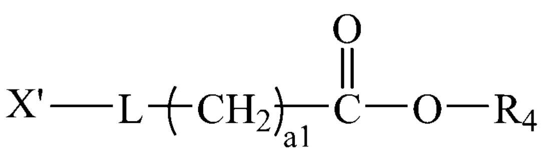

formula I-1

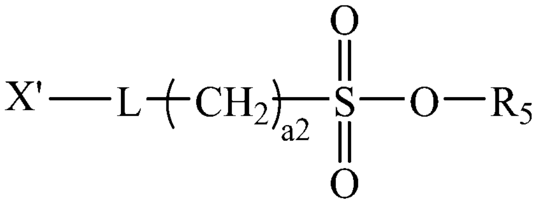

formula I-2

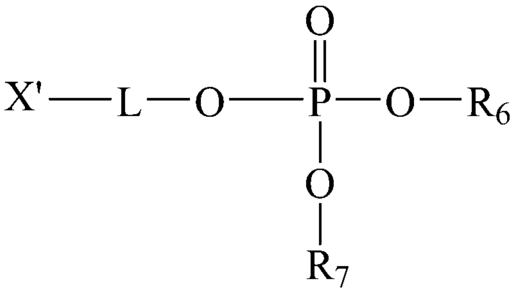

formula I-3

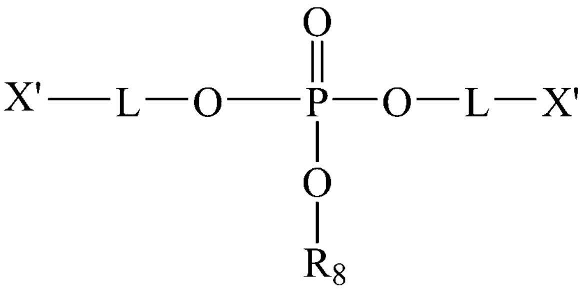

formula I-4,

where

al and a2 are each independently an integer between 2 and 12, $R_4$ and $R_5$ each independently include at least one of hydrogen, a $C_{1-12}$alkyl group, a $C_{1-12}$ alkyl alcohol, and *-NH-$R_9$-OH, and $R_6$, $R_7$, and $R_8$ each independently include at least one of hydrogen, a $C_{1-12}$ alkyl group, a $C_{1-12}$alkyl alcohol, *-NH-$R_{10}$-OH, and

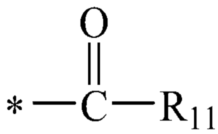

, where $R_9$ and $R_{10}$ each independently include a $C_{1-12}$ alkyl group, and $R_{11}$ includes a $C_{1-12}$ alkyl group or a $C_{6-30}$ aryl group.

In any of embodiments, the polymer includes at least one of structures expressed by formula I-1, formula I-2, and formula I-4,

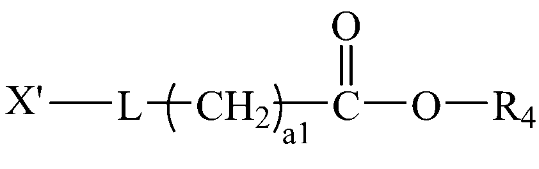

formula I-1

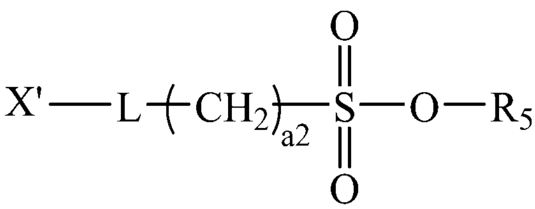

formula I-2

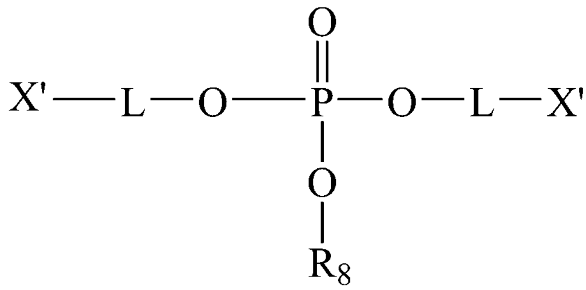

formula I-4,

where

a1 and a2 are each independently an integer between 2 and 12, $R_4$ and $R_5$ each independently include at least one of a $C_{1-12}$ alkyl alcohol and *-NH-R9-OH , and $R_8$ includes at least one of hydrogen, a $C_{1-12}$ alkyl alcohol, *-NH-$R_{10}$-OH, and

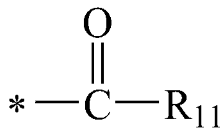

,

where $R_9$ and $R_{10}$ are each independently include a $C_{1-12}$ alkylene group, and $R_{11}$ includes a $C_{1-12}$ alkyl group or a $C_{6-30}$ aryl group.

In any of embodiments, $R_3$ in the structural unit expressed by formula II includes hydrogen.

Since $R_3$ in the structural unit expressed by formula II includes hydrogen, hydrogen bonding can be produced with the oxygen atom on the surface of the positive electrode active material, thereby further improving the dispersion effect of the polymer on the slurry, increasing the solid content of the slurry, slowing down the gel phenomenon of the slurry, improving the flexibility of the electrode plate, reducing the film resistance of the electrode plate, and improving the first coulombic efficiency and high temperature storage performance of the battery.

In any of embodiments, $R_1$ includes

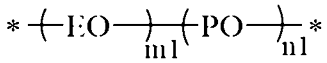

,

and $R_2$ includes

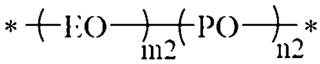

,

where n1 or n2 is 0, and m1 and m2 are each independently an integer between 3 and 60.

The polymer contains a polyethylene oxide chain segment or a polyethylene oxide-propylene oxide chain segment, thereby improving the flexibility of the polymer, reducing the slip resistance between particles in the cold pressing process of the electrode plate, improving the flexibility of the electrode plate, and improving the first coulombic efficiency and high temperature storage performance of the battery.

In any of embodiments, $R_1$ includes

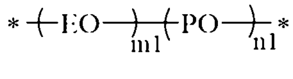

,

and $R_2$ includes

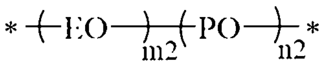

,

where n1 and n2 are each independently an integer between 1 and 60, and m1 and m2 are each independently an integer between 3 and 30.

The polymer contains a polyethylene oxide-propylene oxide chain segment, thereby further improving the flexibility of the polymer, reducing the slip resistance between particles in the cold pressing process of the electrode plate, improving the flexibility of the electrode plate, reducing the film resistance of the electrode plate, and improving the first coulombic efficiency and high temperature storage performance of the battery.

In any of embodiments, a repetition number of the structural units expressed by formula II in L is 3-100.

The repetition number of the structural units expressed by formula II is controlled within an appropriate range, thereby ensuring that the polymer has a sufficient number of amide groups, ensuring that the polymer can generate sufficient intermolecular induction force and form sufficient intermolecular force with the solid particles in the slurry system, and improving the dispersibility of the polymer. Moreover, the amount of the structural units expressed by formula II is appropriate, so that the polymer has excellent solubility in the slurry system, the polymer is fully extended in the slurry system, and the dispersant can act as a dispersant.

In any of embodiments, X' includes at least one of a $C_{3-30}$ alkyl group and a $C_{6-30}$ aryl group.

In any of embodiments, a weight average molecular weight of the polymer is 1500 g/mol-70000 g/mol.

In any of embodiments, a glass transition temperature of the polymer is 50°C-200°C.

In any of embodiments, a melting point of the polymer at one standard atmospheric pressure is 70°C-300°C.

In any of embodiments, a hydrophilic-lipophilic balance value of the polymer is 6-16.

In any of embodiments, the hydrophilic-lipophilic balance value of the polymer is 10-12.

According to a second aspect, the present application provides a preparation method for a polymer, which includes:

1) condensation reaction: polymerizing at least one diacid and at least one diamine to prepare an intermediate polymer, where the intermediate polymer includes a structure expressed by formula III,

Y'-L-Y formula III,

where

Y' and Y each independently include a carboxyl group or an amino group; and

2) end group reaction: enabling end groups of the intermediate polymer to react to obtain a polymer including a structure expressed by formula I,

X'-L-X formula I,

where

X includes at least one of a carboxyl group, an ester group, a sulfo group, a sulfonate group, a phospho group, and a phosphate group;

X' includes a non-polar group; and

L includes a structural unit expressed by formula II,

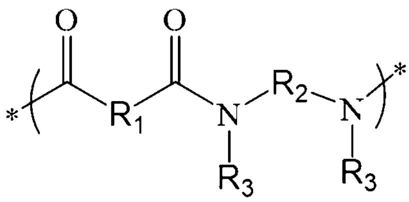

formula II,

where

$R_1$ includes a $C_{1-12}$ alkylene group, a $C_{6-12}$ arylene group or

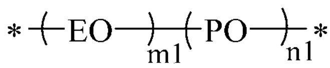

,

includes a $C_{1-12}$alkylene group, a $C_{6-12}$ arylene group or

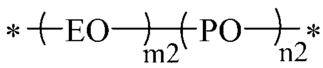

,

and $R_3$ includes hydrogen or a $C_{1-3}$ alkyl group, where EO represents $-CH_2-CH_2-O-$, PO represents $-CH(CH_3)-CH_2-O-$, m1 and m2 are each independently an integer between 3 and 60, and n1 and n2 are each independently an integer between 0 and 60.

The preparation method in the present application can obtain a polymer containing a carboxyl group, an ester group, a sulfo group, a sulfonate group, a phospho group or a phosphate group at one end, a non-polar group at the other end, and an amide group in a main chain. Using the polymer as a dispersant can adapt to positive electrode active materials with different graphitization degrees, thereby improving the dispersibility of slurry systems containing positive electrode active materials with different graphitization degrees, increasing the solid content of the slurry, slowing down the gel phenomenon of the slurry, reducing the film resistance of the electrode plate, improving the flexibility of the electrode plate, and improving the first coulombic efficiency and high temperature cycling performance of the battery.

In any of embodiments, the preparation method specifically includes:

stirring a catalyst, at least one diacid, and at least one diamine at 20°C-300°C for reaction for 2 h-35 h to obtain the intermediate polymer, where two ends of the intermediate polymer have the same end group; and
enabling the end groups at the two ends of the intermediate polymer to respectively react to obtain the polymer.

In the present application, the polymer is prepared by condensation reaction and end group reaction, the preparation method is simple, and the production efficiency is improved.

According to a third aspect, the present application provides a dispersant, which includes the polymer according to the first aspect or the polymer prepared by the preparation method according to the second aspect.

According to a fourth aspect, the present application provides application of the polymer according to the first aspect to a secondary battery.

According to a fifth aspect, the present application provides a positive electrode slurry, which includes a positive electrode active material, a conductive agent, a binder, and a dispersant, where the dispersant includes the polymer according to the first aspect.

The positive electrode slurry has excellent dispersibility and high solid content, which can be used for preparing high-performance electrode plates.

In any of embodiments, the positive electrode active material includes lithium iron phosphate with a carbon coating layer on a surface.

In any of embodiments, a graphitization degree of lithium iron phosphate with the carbon coating layer on the surface is 10%-30%.

The polymer dispersant in the present application is applicable to slurry systems using lithium iron phosphate with different graphitization degrees as the positive electrode active material, has universality, and helps to reduce the preparation cost and improve the production efficiency.

In any of embodiments, a mass fraction of the dispersant is 0.01%-3% based on a total mass of solid materials in the positive electrode slurry.

The mass fraction of the dispersant is within an appropriate range, so that the slurry has high solid content, the electrode plate has excellent flexibility, and the battery has excellent first coulombic efficiency and high temperature storage performance.

In any of embodiments, the mass fraction of the dispersant is 0.03%-2% based on the total mass of solid materials in the positive electrode slurry.

The mass fraction of the dispersant is within an appropriate range, thereby further improving the flexibility of the electrode plate and improving the high temperature storage performance of the battery.

According to a sixth aspect, the present application provides a positive electrode plate, which includes a positive electrode current collector and a positive electrode film arranged on at least one surface of the positive electrode current collector, where the positive electrode film is prepared from the positive electrode slurry according to the fifth aspect.

The positive electrode plate in the present application has excellent flexibility and low film resistance, and the electrode plate has excellent performance in use.

According to a seventh aspect, the present application provides a secondary battery, which includes a separator, a negative electrode plate, an electrolyte, and the positive electrode plate according to the sixth aspect.

According to an eighth aspect, the present application provides a power consuming apparatus, which includes the secondary battery according to the seventh aspect.

## BRIEF DESCRIPTION OF THE DRAWINGS

FIG. 1 is a schematic diagram of a secondary battery according to an embodiment of the present application;
FIG. 2 is an exploded diagram of the secondary battery according to the embodiment of the present application shown in FIG. 1;
FIG. 3 is a schematic diagram of a battery module according to an embodiment of the present application;
FIG. 4 is a schematic diagram of a battery pack according to an embodiment of the present application;
FIG. 5 is an exploded diagram of the battery pack according to the embodiment of the present application shown in FIG. 4; and
FIG. 6 is a schematic diagram of a power consuming apparatus powered by a secondary battery according to an embodiment of the present application.

Description of reference numerals:

1-battery pack; 2-upper box; 3-lower box; 4-battery module; 5-secondary battery; 51-case; 52-electrode assembly; and 53-cover plate.

## DETAILED DESCRIPTION

Embodiments which disclose a polymer, a preparation method, a dispersant, a positive electrode slurry, a positive electrode plate, a secondary battery, and a power consuming apparatus in the present application will be described below in detail with appropriate reference to the drawings. However, there may be situations where unnecessary detailed descriptions are omitted. For example, there may be situations where detailed descriptions of well-known matters and repeated descriptions of actually the same structure are omitted, for the purpose of preventing the following descriptions from becoming unnecessarily lengthy, and helping to understand by those skilled in the art. In addition, the drawings and subsequent descriptions are provided for those skilled in the art to fully understand the present application, and are not intended to limit the subject matters recited in the claims.

Any "range" disclosed in the present application is defined by a lower limit and an upper limit. A given range is defined by selecting a lower limit and an upper limit. The selected lower limit and upper limit define boundaries of the particular range. The range defined in this way may include or exclude end values, and may be combined in any way, that is, any lower limit may be combined with any upper limit to form a new range. For example, if ranges of 60-120 and 80-110 are listed for a particular parameter, it is to be understood that ranges of 60-110 and 80-120 are also expectable. Additionally, if the minimum range values 1 and 2 and the maximum range values 3, 4 and 5 are listed, the following ranges are all expectable: 1-3, 1-4, 1-5, 2-3, 2-4, and 2-5. In the present application, unless otherwise stated, the numerical range "a-b" represents an abbreviated representation of any combination of real numbers between a and b, where both a and b are real numbers. For example, the numerical range "0-5" means that all real numbers between 0 and 5 are listed herein, and "0-5" is merely an abbreviated representation of the combination of these numbers. In addition, when a certain parameter is expressed as an integer $\geq 2$, it is equivalent to disclosing that the parameter is, for example, and integer such as 2, 3, 4, 5, 6, 7, 8, 9, 10, 11, 12, or the like.

Unless otherwise specified, all the embodiments and optional embodiments of the present application may be combined with each other to form new technical solutions.

Unless otherwise specified, all technical features and optional technical features of the present application may be combined with each other to form new technical solutions.

Unless otherwise specified, all steps in the present application may be performed sequentially or randomly, and preferably, sequentially. For example, "the method including steps (a) and (b)" represents that the method may include steps (a) and (b) performed sequentially, or may include steps (b) and (a) performed sequentially. For example, "the method may further include step (c)" represents that step (c) may be added to the method in any order. For example, the method may include steps (a), (b) and (c), or steps (a), (c) and (b), or steps (c), (a) and (b), or the like.

Unless otherwise specified, "comprising" and "including" mentioned in the present application represents open inclusion or closed inclusion. For example, the terms "comprise" and "include" may indicate that other components not listed may further be comprised or included, or only listed components may be comprised or included.

Unless otherwise specified, in the present application, the term "or" is inclusive. For example, the phrase "A or B" represents "A, B, or both A and B". More specifically, any one of the following conditions satisfies the condition "A or B": A is true (or present) and B is false (or not present); A is false (or not present) and B is true (or present); or both A and B are true (or present).

A positive electrode slurry is mainly a solid-liquid mixture system formed by a positive electrode active material, a conductive agent, a binder, and a solvent. In the related art, a dispersant is often added to improve the dispersibility of the slurry. However, the dispersant in the related art is usually only applicable to slurry systems with fixed components, the universality is poor, and it is often necessary to adjust the dispersant after the physical properties of each component in the slurry change. For example, the degreed of carbon coating on surfaces of lithium iron phosphate produced under different

process conditions in the related art are different, and the graphitization degrees of lithium iron phosphate are also different. Often, a dispersant is not applicable to lithium iron phosphate with different graphitization degrees. The use of the dispersant in the related art for slurry systems using lithium iron phosphate with different graphitization degrees as the positive electrode active material results in unsatisfactory dispersibility of the slurry systems, making it difficult to meet the performance requirements of electrode plates and batteries.

[Dispersant]

Based on this, the present application provides a polymer, which includes a structure expressed by formula I,

$$X'-L-X$$ formula I,

where

X includes at least one of a carboxyl group, an ester group, a sulfo group, a sulfonate group, a phospho group, and a phosphate group; X' includes a non-polar group; and L includes a structural unit expressed by formula II,

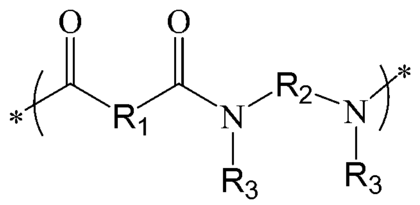
formula II,

where
$R_1$ includes a $C_{1-12}$ alkylene group, a $C_{6-12}$ arylene group or

$$*\!-\!(EO)_{m1}\!-\!(PO)_{n1}\!-\!*$$ ,

$R_2$ includes a $C_{1-12}$ alkylene group, a $C_{6-12}$ arylene group or

$$*\!-\!(EO)_{m2}\!-\!(PO)_{n2}\!-\!*$$ ,

and $R_3$ includes hydrogen or a $C_{1-3}$ alkyl group, where
EO represents $-CH_2-CH_2-O-$, PO represents $-CH(CH_3)-CH_2-O-$, m1 and m2 are each independently an integer between 3 and 60, and n1 and n2 are each independently an integer between 0 and 60.

Herein, the term "polymer" includes, on the one hand, aggregates of chemically homogeneous macromolecules with different polymerization degrees, molar masses, and chain lengths prepared through polymerization reactions. On the other hand, this term also includes derivatives of aggregates of macromolecules formed through polymerization reactions, i.e., compounds which may be obtained through reactions of functional groups in the macromolecules, such as addition or substitution, and may be chemically homogeneous or chemically heterogeneous.
Herein, the term "carboxyl group" refers to -COOH.
Herein, the term "ester group" refers to

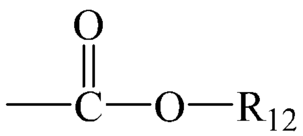
,

where $R_{12}$ is a non-hydrogen group.
Herein, the term "sulfo group" refers to $-SO_3H$.

Herein, the term "sulfonate group" refers to

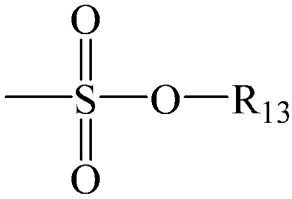

,

where $R_{13}$ is a non-hydrogen group.

Herein, the term "phospho group" refers to

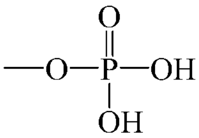

or

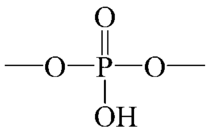

.

Herein, the term "phosphate group" refers to

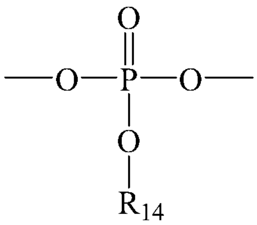

,

where $R_{14}$ is a non-hydrogen group.

Herein, the term "amide group" refers to

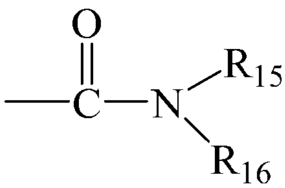

,

where $R_{15}$ and $R_{16}$ are each independently a hydrogen or non-hydrogen group.

Herein, the term "amino group" refers to

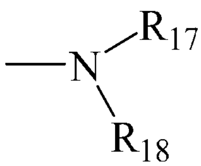

,

where $R_{17}$ and $R_{18}$ are each independently a hydrogen or non-hydrogen group.

Herein, the term "non-polar group" refers to a functional group with overlapping positive and negative charge centers, including but not limited to an alkyl group and an aryl group.

Herein, the term "alkyl" refers to a straight or branched hydrocarbon chain group composed solely of carbon and hydrogen atoms, and having no unsaturation in the group.

Herein, the term "aryl group" refers to an aromatic ring system in which at least one ring is aromatic.

In some embodiments, the non-polar group includes a $C_{3-30}$ alkyl group or a $C_{6-30}$ aryl group.

In some embodiments, X' includes at least one of a $C_{3-30}$ alkyl group and a $C_{6-30}$ aryl group.

Herein, the term "$C_{3-30}$ alkyl" refers to a straight or branched hydrocarbon chain group composed solely of carbon

and hydrogen atoms, having no unsaturation in the group, having 6-30 carbon atoms, and attached to other parts of a molecule through a single bond. The terms "$C_{1-3}$ alkyl" and "$C_{1-12}$ alkyl" should be explained correspondingly.

Herein, the term "$C_{6-30}$ aryl group" refers to a monovalent functional group formed by removing one hydrogen atom from a ring of an aromatic hydrocarbon containing 6-30 carbon atoms, such as a phenyl group or a naphthyl group. The aromatic hydrocarbon refers to a hydrocarbon with an aromatic ring, including a monocyclic hydrocarbon and a polycyclic hydrocarbon, where other rings of the polycyclic hydrocarbon may be aromatic or non-aromatic.

Herein, the term "$C_{1-12}$ alkylene group" refers to a branched and straight chain saturated aliphatic divalent hydrocarbyl group with a specified number of carbon atoms. Herein, the group has no unsaturation, has 1-12 carbon atoms, and is attached to other parts of a molecule through a single bond.

Herein, the term "$C_{6-12}$ arylene group" refers to a divalent functional group formed by removing two hydrogen atoms from a ring of an aromatic hydrocarbon containing 6-12 carbon atoms, such as a phenylene group or a naphthalenediyl group.

Herein, the EO unit and the PO unit in

$$*\!-\!\left(EO\right)_{m1}\!-\!\left(PO\right)_{n1}\!-\!*$$

and

$$*\!-\!\left(EO\right)_{m2}\!-\!\left(PO\right)_{n2}\!-\!*$$

may be arranged irregularly or in blocks.

Herein, the term "dispersant" refers to a substance that prevents solid particles from aggregating with each other in a solid-liquid dispersion system, allowing solid particles to remain uniformly dispersed in a liquid phase for a longer period of time.

In some embodiments, a dispersing medium of the dispersant is an aqueous solvent, such as water. That is, the dispersant is dissolved in the aqueous solvent.

In some embodiments, the dispersing medium of the dispersant is an oily solvent, examples of which include, but not limited to, dimethylacetamide, N,N-dimethylformamide, N-methylpyrrolidone, acetone, dimethyl carbonate, ethyl cellulose, and polycarbonate. That is, the dispersant is dissolved in the oily solvent.

In some embodiments, the dispersant is used as a dispersant for a positive electrode slurry, and is used for dispersing a positive electrode active material, a conductive agent, and a binder to form the positive electrode slurry.

In some embodiments, the dispersant is used as a dispersant for a negative electrode slurry, and is used for dispersing a negative electrode active material, a conductive agent, and a binder to form the negative electrode slurry.

In some embodiments, an X group includes a carboxyl group, a sulfo group, or a phospho group.

The carboxyl group, the sulfo group, or the phospho group may be ionized to produce negative ions, and adsorb the surface of the positive electrode active material particle in the slurry system mainly through electrostatic interaction to anchor one end of the polymer to the surface of the positive electrode active material particle.

In some embodiments, an X group includes an ester group, a sulfonate group, or a phosphate group.

The ester group, the sulfonate group, or the phosphate group may adsorb the surface of the positive electrode active material particle in the slurry system through intermolecular force to anchor one end of the polymer to the surface of the positive electrode active material particle.

An end group at one end of the polymer includes a non-polar group and exhibits lipophilicity, while an end group at the other end includes at least one of a carboxyl group, an ester group, a sulfo group, a sulfonate group, a phospho group, and a phosphate group, and exhibits polarity and hydrophilicity. After adding the polymer to the slurry system, the carboxyl group, the ester group, the sulfo group, the sulfonate group, the phospho group or the phosphate group at one end, acting as an anchoring point, is adsorbed on the surface of the positive electrode active material particle, while the other end is suspended in the slurry to form a three-dimensional barrier. When solid particles get close to each other, this three-dimensional barrier will generate a strong repulsive force, prevent particle aggregation, and form a uniformly-dispersed stable slurry. An amide group contained in the structural unit expressed by formula II is a polar group, can generate a strong intermolecular induction force, and can form a strong intermolecular acting force with the particle, thereby further improving the dispersibility of the polymer. In addition, the oxygen atom and the nitrogen atom in the amide group can form hydrogen bonding with the hydroxyl group and/or the carboxyl group on the surface of the positive electrode active material. Moreover, the nitrogen atom and the oxygen atom can coordinate with the positive electrode active material to jointly enhance the dispersion effect of the polymer dispersant on the particles in the slurry system. L chain segments contain fewer branches, bond angles are relatively fixed, a certain linear structure is presented in the slurry system, the chain segments are completely stretched in the slurry system, the chain segments are not easily entangled, the spatial

hindrance generated thereby fully isolates the solid particles, and full stretching of the L chain segments also enables the amide group to interact fully with different particles, thereby further improving the dispersion effect. The polymer dispersant in the present application can achieve multi-site adsorption on surfaces of positive electrode active materials with different graphitization degrees, thereby making the adsorption effect more significant and enhancing the dispersion effect of the polymer dispersant on the slurry.

In addition, the structural unit expressed by formula II in each L chain segment contains an amide group. Due to a p-π conjugation effect, lone pair charges of a nitrogen atom on the amide group may delocalize to a C-N single bond. Moreover, the amide group, as a carboxylic acid derived group, may undergo enol interconversion under acidic or alkaline conditions. Its α-C and carbonyl carbon may produce instantaneous double bonds, so the entire L chain segment contains some double bond properties, and the L chain segment tends to be linear, which may reduce the slip resistance between the positive electrode active materials in a cold pressing process, play a role of increasing the flexibility of the electrode plate, and improve the flexibility of the electrode plate.

To sum up, using the polymer in the present application as a dispersant can improve the dispersibility of the slurry containing positive electrode active materials with different graphitization degrees under the action of multi-site adsorption, increase the solid content of the slurry, slow down the gel phenomenon of the slurry, reduce the film resistance of the electrode plate, and improve the first coulombic efficiency and high temperature cycling performance of the battery. Moreover, it can also improve the flexibility of the electrode plate, thereby providing a foundation for the subsequent preparation of a thick coated high-compact-density electrode plate.

The compatibility of the dispersant in the related art is poor, and it cannot adapt to the difference in positive electrode active materials under different process conditions in the slurry. The present application improves the dispersibility of the polymer through the combined action of the X group, the amide group, and the L chain segment at the ends, improves the dispersibility of the polymer, improves the applicability of the polymer dispersant to positive electrode active materials with different graphitization degrees, improves the universality of the polymer dispersant, and helps to reduce the preparation cost and improve the production efficiency.

In some embodiments, the polymer includes at least one of structures expressed by formula I-1, formula I-2, formula I-3, and formula I-4,

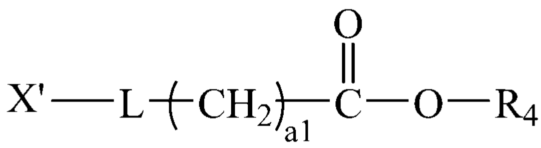

formula I-1

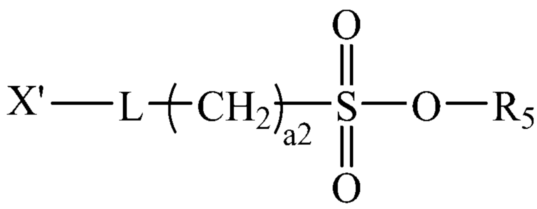

formula I-2

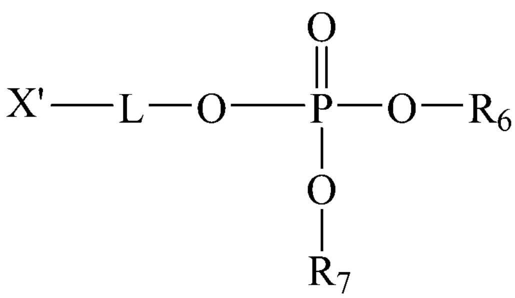

formula I-3

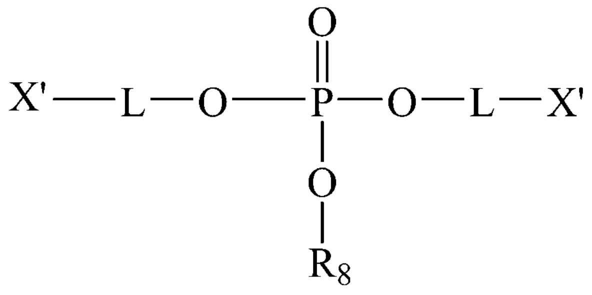

formula I-4,

where

a1 and a2 are each independently an integer between 2 and 12, $R_4$ and $R_5$ each independently include at least one of hydrogen, a $C_{1-12}$ alkyl group, a $C_{1-12}$ alkyl alcohol, and *-NH-$R_9$-OH, and $R_6$, $R_7$, and $R_8$ each independently include at least one of hydrogen, a $C_{1-12}$ alkyl group, a $C_{1-12}$ alkyl alcohol, * -NH-$R_{10}$-OH, and

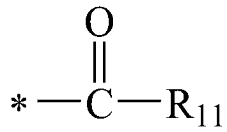,

where $R_9$ and $R_{10}$ each independently include a $C_{1-12}$ alkyl group, and $R_{11}$ includes a $C_{1-12}$ alkyl group or a $C_{6-30}$ aryl group.

Herein, the term "$C_{1-12}$ alkyl alcohol" refers to a monovalent atomic group in which an alkylene group is bonded to a hydroxyl group (-OH), and is represented by "-$C_nH_{2n}$-OH" (where n is a natural number from 1 to 12).

In some embodiments, the polymer includes at least one of structures expressed by formula I-1, formula I-2, and formula I-4,

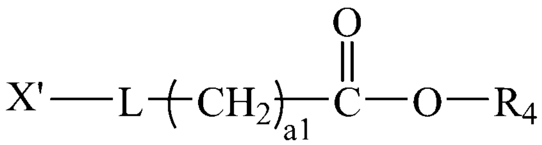

formula I-1

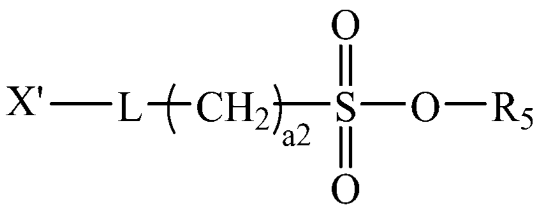

formula I-2

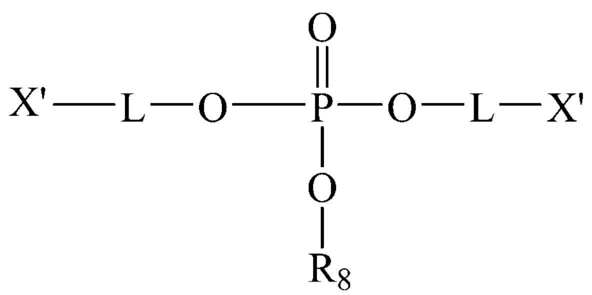

formula I-4,

where

a1 and a2 are each independently an integer between 2 and 12, $R_4$ and $R_5$ each independently include at least one of a $C_{1-12}$ alkyl alcohol and *-NH-$R_9$-OH, and $R_8$ includes at least one of hydrogen, a $C_{1-12}$ alkyl alcohol, * -NH-$R_{10}$-OH, and

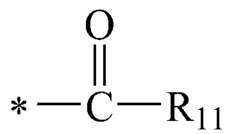
,

where $R_9$ and $R_{10}$ are each independently include a $C_{1-12}$ alkylene group, and $R_{11}$ includes a $C_{1-12}$ alkyl group or a $C_{6-30}$ aryl group.

In some embodiments, L further includes one or more of *-HN-$R_2$-HN-* ,

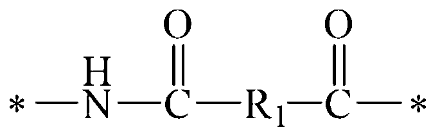
,
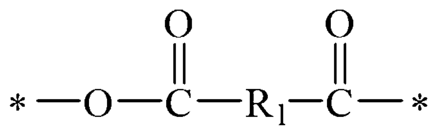
,
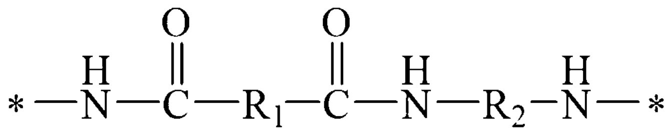
,

and

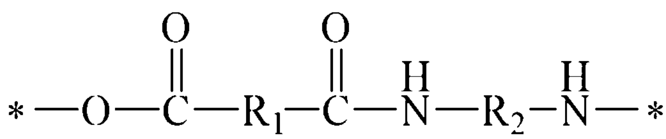
.

In some embodiments, $R_4$ in the structure expressed by formula I-1 includes hydrogen.

Since $R_4$ includes hydrogen, the polymer can be ionized to produce negative ions and can adsorb the surface of the positive electrode active material particle in the slurry system through electrostatic action, thereby improving the dispersion effect of the polymer dispersant, increasing the solid content of the slurry, slowing down the gel phenomenon of the slurry, improving the flexibility of the electrode plate, and improving the performance of the slurry and the electrode plate in use.

In some embodiments, $R_4$ in the structure expressed by formula I-1 includes a $C_{1-12}$ alkyl alcohol or *-NH-$R_9$-OH.

Since $R_4$ includes the $C_{1-12}$ alkyl alcohol or *-NH-$R_9$-OH , the amino or hydroxyl group therein can generate adsorption force with the positive electrode active material particle in the slurry system, thereby improving the dispersion effect of the polymer dispersant, increasing the solid content of the slurry, and improving the performance of the slurry in use.

In some embodiments, $R_5$ in the structure expressed by formula I-2 includes hydrogen.

Since $R_5$ includes hydrogen, the polymer can be ionized to produce negative ions and can adsorb the surface of the positive electrode active material particle in the slurry system through electrostatic action, thereby improving the dispersion effect of the polymer dispersant, increasing the solid content of the slurry, slowing down the gel phenomenon of the slurry, improving the flexibility of the electrode plate, reducing the film resistance of the electrode plate, and improving the first coulombic efficiency and high temperature cycling performance of the battery.

In some embodiments, $R_5$ in the structure expressed by formula I-2 includes a $C_{1-12}$ alkyl alcohol or *-NH-$R_9$-OH.

Since $R_5$ includes the $C_{1-12}$ alkyl alcohol or *-NH-$R_9$-OH , the amino or hydroxyl group therein can generate adsorption force with the positive electrode active material particle in the slurry system, thereby improving the dispersion effect of the polymer dispersant, increasing the solid content of the slurry, slowing down the gel phenomenon of the slurry, improving the flexibility of the electrode plate, reducing the film resistance of the electrode plate, and improving the first coulombic efficiency and high temperature cycling performance of the battery.

In some embodiments, $R_6$ or $R_7$ in the structure expressed by formula I-3 includes hydrogen.

Since $R_6$ or $R_7$ includes hydrogen, the polymer can be ionized to produce negative ions and can adsorb the surface of the positive electrode active material particle in the slurry system through electrostatic action, thereby improving the dispersion effect of the polymer dispersant, increasing the solid content of the slurry, slowing down the gel phenomenon of the slurry, improving the flexibility of the electrode plate, reducing the film resistance of the electrode plate, and improving the first coulombic efficiency and high temperature cycling performance of the battery.

In some embodiments, $R_6$ or $R_7$ in the structure expressed by formula I-3 includes a $C_{1-12}$ alkyl alcohol, *-NH-$R_{10}$-OH or

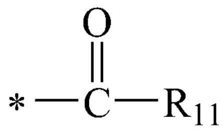.

Since $R_6$ or $R_7$ includes the $C_{1-12}$ alkyl alcohol, * -NH-$R_{10}$-OH or

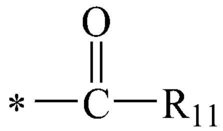,

the amino or hydroxyl group therein can generate adsorption force with the positive electrode active material particle in the slurry system, thereby improving the dispersion effect of the polymer dispersant, increasing the solid content of the slurry, slowing down the gel phenomenon of the slurry, improving the flexibility of the electrode plate, reducing the film resistance of the electrode plate, and improving the first coulombic efficiency and high temperature cycling performance of the battery.

In some embodiments, $R_8$ in the structure expressed by formula I-4 includes hydrogen.

Since $R_8$ includes hydrogen, the polymer can be ionized to produce negative ions and can adsorb the surface of the positive electrode active material particle in the slurry system through electrostatic action, thereby improving the dispersion effect of the polymer dispersant, reducing the film resistance of the electrode plate, and improving the first coulombic efficiency and high temperature storage performance of the battery.

In some embodiments, $R_8$ in the structure expressed by formula I-4 includes at least one of a $C_{1-12}$ alkyl alcohol, * -NH-$R_{10}$-OH and

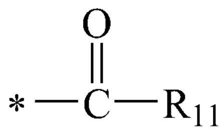.

Since $R_8$ includes the $C_{1-12}$ alkyl alcohol, * -NH-$R_{10}$-OH or

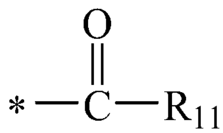,

the amino group, hydroxyl group or ester group therein can generate adsorption force with the positive electrode active material particle in the slurry system, thereby improving the dispersion effect of the polymer dispersant, improving the flexibility of the electrode plate, and improving the high temperature storage performance of the battery.

In some embodiments, the polymer includes the structure expressed by formula I-4.

Compared with the structure expressed by formula I-3 which contains one L chain segment, the structure expressed by formula I-4 contains two L chain segments, thereby improving the dispersion effect of the polymer dispersant, making the slurry have high solid content, improving the first coulombic efficiency and high temperature cycling performance of the battery, and improving the electrochemical performance of the battery.

In some embodiments, $R_3$ in the structural unit expressed by formula II includes hydrogen.

Since $R_3$ in the structural unit expressed by formula II includes hydrogen, hydrogen bonding can be produced with the oxygen atom on the surface of the positive electrode active material, thereby further improving the dispersibility of the slurry, increasing the solid content of the slurry, slowing down the gel phenomenon of the slurry, improving the flexibility of the electrode plate, reducing the film resistance of the electrode plate, and improving the first coulombic efficiency and high temperature storage performance of the battery.

In some embodiments, $R_1$ includes a $C_{1-12}$ alkylene group or

$$*\!\left(EO\right)_{m1}\!\left(PO\right)_{n1}*,$$

and $R_2$ includes a $C_{1-12}$ alkylene group or

$$*\!\left(EO\right)_{m2}\!\left(PO\right)_{n2}*,$$

where m1 and m2 are each independently an integer between 3 and 60, and n1 and n2 are each independently an integer between 0 and 60.

By introducing a longer alkyl group chain segment or a flexible chain segment of polyether into the L chain segment, the flexibility of the electrode plate can be improved.

In some embodiments, $R_1$ includes

$$*\!\left(EO\right)_{m1}\!\left(PO\right)_{n1}*,$$

and $R_2$ includes

$$*\!\left(EO\right)_{m2}\!\left(PO\right)_{n2}*,$$

where n1 or n2 is 0, and m1 and m2 are each independently an integer between 3 and 60.

Herein, the term "polyethylene oxide chain segment" refers to a polymer chain segment containing a structural unit $-CH_2-CH_2-O-$.

Herein, the term "polyethylene oxide-propylene oxide chain segment" refers to a polymer chain segment containing structural units $-CH_2-CH_2-O-$ and $-CH(CH_3)-CH_2-O-$.

The polymer contains the polyethylene oxide chain segment or the polyethylene oxide-propylene oxide chain segment, thereby improving the flexibility of the polymer, reducing the slip resistance between particles in the cold pressing process of the electrode plate, improving the flexibility of the electrode plate, and improving the performance of the electrode plate in use.

In some embodiments, $R_1$ includes

$$*\!\left(EO\right)_{m1}\!\left(PO\right)_{n1}*,$$

and $R_2$ includes

$$*\!\left(EO\right)_{m2}\!\left(PO\right)_{n2}*,$$

where n1 and n2 are each independently an integer between 1 and 60, and m1 and m2 are each independently an integer between 3 and 30.

The polymer contains the polyethylene oxide-propylene oxide chain segment, thereby further improving the flexibility of the polymer, reducing the slip resistance between particles in the cold pressing process of the electrode plate, improving the flexibility of the electrode plate, improving the performance of the electrode plate in use, and improving the high temperature storage performance of the battery.

In some embodiments, a repetition number of the structural units expressed by formula II in L is 3-100.

In some embodiments, the repetition number of the structural units expressed by formula II in L is optionally any one of 3, 10, 20, 30, 40, 50, 60, 70, 80, 90, and 100, or within a range formed by any two thereof.

In some embodiments, the repetition number of the structural units expressed by formula II in L is 8-80.

In some embodiments, the repetition number of the structural units expressed by formula II in L is optionally any one of 8, 10, 20, 30, 40, 50, 60, 70, and 80, or within a range formed by any two thereof.

The repetition number of the structural units expressed by formula II is controlled within an appropriate range,

thereby ensuring that the polymer has a sufficient number of amide groups, ensuring that the polymer can generate sufficient intermolecular induction force and form sufficient intermolecular force with the solid particles in the slurry system, and improving the dispersibility of the polymer. Moreover, the amount of the structural units expressed by formula II is appropriate, so that the polymer has excellent solubility in the slurry system, the polymer is fully extended in the slurry system, and the dispersant can act as a dispersant.

In some embodiments, based on a mass of the polymer, a mass percentage of X in the polymer is 0.5%-20%.

In some embodiments, based on the mass of the polymer, a total mass percentage of $R_1$ and $R_2$ in the polymer is 20%-80%.

In some embodiments, based on the mass of the polymer, a mass percentage of

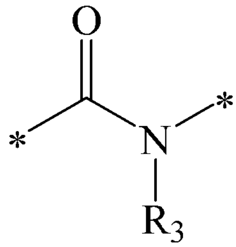

in the polymer is 0.5% -50%.

Mass percentages of the X group, $R_1$, $R_2$, and the amide group are controlled within an appropriate range, so that the X anchoring group, the L chain segment, and the amide group can fully exert their respective advantages and work together to make the polymer have excellent dispersibility, thereby improving the dispersibility of the slurry.

In some embodiments, a weight average molecular weight of the polymer is 1500 g/mol-70000 g/mol.

In some embodiments, the weight average molecular weight of the polymer is optionally any one of 1500 g/mol, 2000 g/mol, 2500 g/mol, 3000 g/mol, 3500 g/mol, 4000 g/mol, 4500 g/mol, 5000 g/mol, 5500 g/mol, 6000 g/mol, 6500 g/mol, 7000 g/mol, 7500 g/mol, 8000 g/mol, 8500 g/mol, 9000 g/mol, 9500 g/mol, 10000 g/mol, 15000 g/mol, 20000 g/mol, 25000 g/mol, 30000 g/mol, 35000 g/mol, 40000 g/mol, 45000 g/mol, 50000 g/mol, 55000 g/mol, 60000 g/mol, 65000 g/mol, and 70000 g/mol, or within a range formed by any two thereof.

Herein, the term "weight average molecular weight" refers to the sum of products of weight fractions of molecules with different molecular weights in the polymer and corresponding molecular weights thereof.

In the present application, the weight average molecular weight of the polymer may be tested by using any method known in the art, such as gel chromatography, such as Waters 2695 Isostatic HPLC gel chromatograph (differential refractive detector 2141). In some embodiments, the testing method is to use a polystyrene solution sample with a mass fraction of 3.0% as a reference and select a matching chromatographic column (oil: Styragel HT5DMF7.8*300 mm+Styragel HT4). A 3.0% fluoropolymer solution is prepared by using purified N-methylpyrrolidone (NMP). The prepared solution is stood for one day for future use. During testing, first, a syringe is used to suck tetrahydrofuran to perform rinsing for several times. Then, 5 ml of experimental solution are taken, air in the syringe is removed, and a needle tip is wiped dry. Finally, the sample solution is slowly injected into an injection port. After displayed data are stable, the data are acquired and the weight average molecular weight is read.

If the weight average molecular weight of the polymer is too large, it is difficult for the polymer to dissolve and cannot function as a dispersant. If the weight average molecular weight of the polymer is too small, it cannot play an effective dispersion effect and it is not conducive to the formation of a conductive network, thereby increasing the film resistance of the electrode plate, and decreasing the first coulombic efficiency and high temperature storage performance of the battery.

In some embodiments, a glass transition temperature of the polymer is 50°C-200°C.

In some embodiments, the glass transition temperature of the polymer is optionally any one of 50°C, 60°C, 90°C, 100°C, 120°C, 140°C, 150°C, 170°C, 180°C, 190°C, and 200°C, or within a range formed by any two thereof.

Herein, the term "glass transition temperature" refers to the temperature at which amorphous polymers (including the amorphous portion of crystalline polymers) transition from a glassy state to a highly elastic state or from a highly elastic state to a glassy state. It is the lowest temperature at which the large molecular chain segments of amorphous polymers can move freely.

Herein, the term "glassy state" refers to a state in which amorphous polymers undergo minimal deformation under an external force, with deformation proportional to the magnitude of the force applied, and the deformation can immediately restore once the external force is removed. In the glassy state, the energy of molecular motion is very low, which is not enough to overcome the potential barrier of rotation within the main chain, and is not enough to excite the movement of the chain segments, and the chain segments are in a frozen state. For example, when subjected to external force, the movement of the chain segments is frozen, which can only cause slight changes in the bond length and bond

angle of the main chain. Therefore, macroscopically speaking, the deformation of the polymer under a force is very small.

Herein, the term "highly elastic state" refers to a state in which in which amorphous polymers undergo significant deformation under very small external force. In the highly elastic state, when amorphous polymers are subjected to an external force, the molecular chain undergoes internal rotation of single bonds and conformational changes in chain segments to adapt to the external force. For example, when subjected to a tensile force, the molecular chain can change from a curled state to a stretched state, exhibiting significant deformation at the macroscopic level. Once the external force is removed, the molecular chain will restore to its original curled state through the internal rotation of single bonds and the movement of chain segments, exhibiting elastic contraction at the macroscopic level.

In the present application, the glass transition temperature of the polymer may be tested by using any method known in the art. For example, the glass transition temperature may be tested by using a differential scanning calorimeter (Q1000) of TA company. 6-9 g of the polymer sample are taken, the temperature is increased from room temperature to 200°C at a rate of 10°C/min, and an obtained differential scanning calorimetry curve is analyzed to obtain the glass transition temperature of the polymer, measured in °C.

In some embodiments, a melting point of the polymer at one standard atmospheric pressure is 70°C-300°C.

In some embodiments, the melting point of the polymer at one standard atmospheric pressure is optionally any one of 70°C, 100°C, 120°C, 140°C, 160°C, 180°C, 200°C, 220°C, 240°C, 260°C, 280°C, and 300°C, or within a range formed by any two thereof.

Herein, the term "one standard atmospheric pressure" refers to the pressure at sea level under standard atmospheric conditions, with a value of 101.325 kPa, which is a unit of pressure and denoted as atm.

In the present application, the melting point of the polymer at one standard atmospheric pressure may be tested by using any method known in the art. For example, the melting point may be tested by using a precision microscopic melting point tester (X-5). At one standard atmospheric pressure, 0.01 mg of a uniformly ground sample are taken and placed on a glass slide, the glass slide is covered with another glass slide and is gently compacted, and then the combination is placed at a center of a hot stage. After covering a heat shield, the focus of a microscope is adjusted until the sample can be clearly observed. Then, a temperature knob is adjusted to quickly raise the temperature until the polymer melts slightly, then the heating rate is slowly adjusted until the sample melts completely, and the full melting temperature is recorded as the melting point of the polymer, measured in °C.

In some embodiments, a hydrophilic-lipophilic balance value of the polymer is 6-16.

In some embodiments, the hydrophilic-lipophilic balance value of the polymer is optionally any one of 6, 8, 10, 12, 14, and 16, or within a range formed by any two thereof.

Herein, the term "hydrophilic-lipophilic balance value" is used to characterize the comprehensive trend of the hydrophilicity and lipophilicity of the polymer. The larger the hydrophilic-lipophilic balance value, the better the hydrophilicity of the polymer. Conversely, the smaller the hydrophilic-lipophilic balance value, the poorer the hydrophilicity, and the better the lipophilicity.

Herein, the hydrophilic-lipophilic balance value (HLB) of the polymer may be tested by using any method known in the art, such as emulsification method, whose principle is that when the polymer is used to emulsify an oily medium, if the HLB value of the polymer is the same as the HLB value required for the oil phase medium, the generated emulsion has the best stability. By mixing a standard sample with a known HLB value in proportion, the ideal HLB value can be obtained. The oil phase prepared through emulsification of the polymer is stood for 24 h. The HLB value required for the oil phase in the sample with the best stability is the HLB value of the polymer.

In some embodiments, the hydrophilic-lipophilic balance value of the polymer is 10-12.

In some embodiments, the hydrophilic-lipophilic balance value of the polymer is optionally any one of 10, 11, and 12, or within a range formed by any two thereof.

An embodiment of the present application provides a preparation method for a polymer, which includes:

1) condensation reaction: polymerizing at least one diacid and at least one diamine to prepare an intermediate polymer, where the intermediate polymer includes a structure expressed by formula III,

Y'-L-Y formula III,

where

Y' and Y each independently include a carboxyl group or an amino group; and

2) end group reaction: enabling end groups of the intermediate polymer to react to obtain a polymer including a structure expressed by formula I,

X'-L-X formula I,

where

X includes at least one of a carboxyl group, an ester group, a sulfo group, a sulfonate group, a phospho group, and a phosphate group;

X' includes a non-polar group; and

L includes a structural unit expressed by formula II,

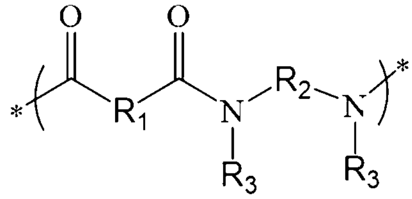

formula II,

where

$R_1$ includes a $C_{1-12}$ alkylene group, a $C_{6-12}$ arylene group or

$$*\!\left(\!-EO-\right)_{m1}\!\left(\!-PO-\right)_{n1}\!*$$ ,

$R_2$ includes a $C_{1-12}$ alkylene group, a $C_{6-12}$ arylene group or

$$*\!\left(\!-EO-\right)_{m2}\!\left(\!-PO-\right)_{n2}\!*$$ ,

and $R_3$ includes hydrogen or a $C_{1-3}$ alkyl group, where EO represents $-CH_2-CH_2-O-$, PO represents $-CH(CH_3)-CH_2-O-$, m1 and m2 are each independently an integer between 3 and 60, and n1 and n2 are each independently an integer between 0 and 60.

Herein, the term "diamine" refers to an amine containing two amino groups.

Herein, the term "diacid" refers to an acid containing two carboxyl groups.

In some embodiments, the diamine has a structure expressed by formula IV,

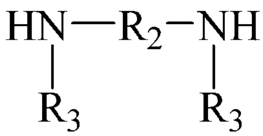

formula IV,

where

$R_2$ includes at least one of a $C_{1-12}$ alkylene group, a $C_{6-12}$ arylene group, and

$$*\!\left(\!-EO-\right)_{m2}\!\left(\!-PO-\right)_{n2}\!*$$ ,

$R_3$ is hydrogen or a $C_{1-3}$ alkyl group, m2 is any integer between 3 and 60, and n2 is any integer between 0 and 60.

In some embodiments, the diamine includes any one of

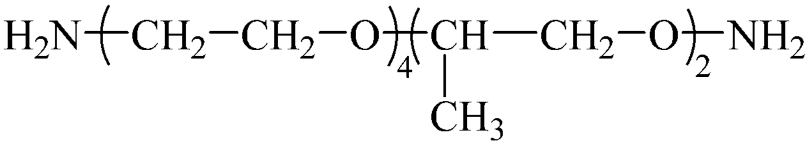

,

$$H_2N\!\left(\!-CH_2-CH_2-O-\right)_4\!NH_2$$ ,

$$H_2N\!\left(\!-CH_2-\right)_6\!NH_2$$ ,

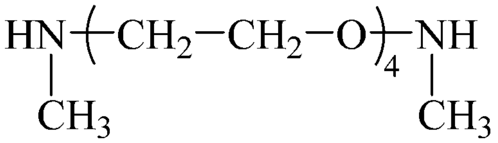, 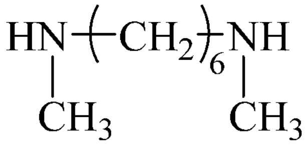,

and

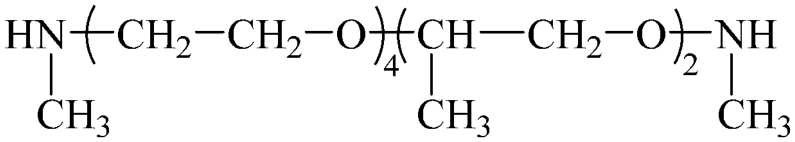.

In some embodiments, the diacid has a structure expressed by formula V,

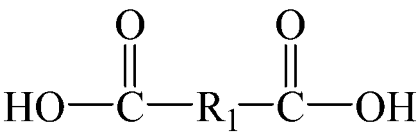 formula V,

where

$R_1$ includes at least one of a $C_{1-12}$ alkylene group, a $C_{6-12}$ arylene group, and

$$*-(EO)_{m1}-(PO)_{n1}-*$$,

m1 is an integer between 3 and 60, and n1 is an integer between 0 and 60.

In some embodiments, the diacid includes any one of

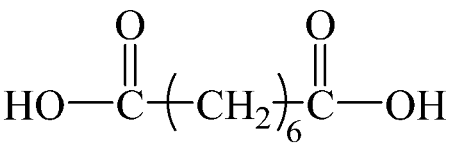, 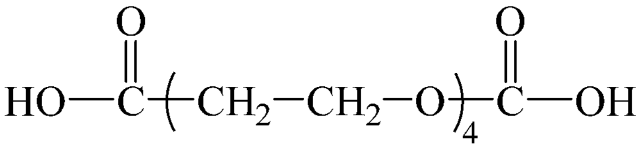,

and

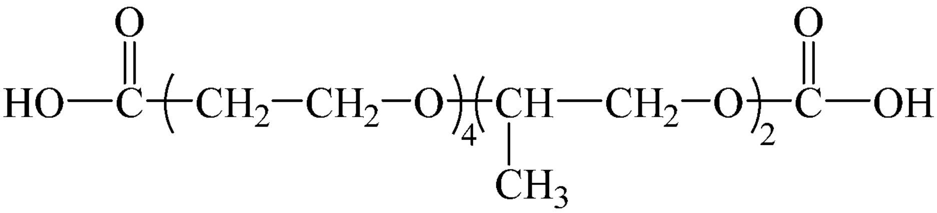.

By adopting this preparation method, the raw materials are cheap, thereby reducing the cost, reducing the environmental pollution, and helping to increase the yield of the polymer dispersant. Moreover, the preparation method can obtain a polymer containing a polar group such as a carboxyl group, an ester group, a sulfo group, a sulfonate group, a phospho group or a phosphate group at one end, a non-polar group at the other end, and an amide group in a main chain. Using the polymer as a dispersant can adapt to positive electrode active materials with different graphitization degrees, thereby improving the dispersibility of slurry systems containing positive electrode active materials with different graphitization degrees, increasing the solid content of the slurry, slowing down the gel phenomenon of the slurry, reducing the film resistance of the electrode plate, improving the flexibility of the electrode plate, and improving the first coulombic efficiency and high temperature cycling performance of the battery.

In some embodiments, the preparation method specifically includes:

stirring a catalyst, at least one diacid, and at least one diamine at 20°C-300°C for reaction for 2 h-35 h to obtain the intermediate polymer, where two ends of the intermediate polymer have the same end group; and

enabling the end groups at the two ends of the intermediate polymer to respectively react to obtain the polymer.

In some embodiments, the end groups of the intermediate polymers are carboxyl groups.

In some embodiments, the end groups of the intermediate polymers are amino groups.

In some embodiments, a synthesis route of the polymer includes polymerizing at least one diacid and at least one diamine under the action of a catalyst to generate an intermediate polymer, making the diacid or diamine excessive so that end groups at two ends are amino groups or carboxyl groups, enabling the amino group or the carboxyl group at one end to undergo functional group reaction with an active monomer containing an X' group, and enabling the amino group or the carboxyl group at the other end to undergo functional group reaction with an active monomer containing an X group to prepare a polymer containing the X group at one end and the X' group at the other end. It can be understood that the active monomer containing the X' group refers to a monomer containing an X' group and an active functional group that can react with the amino group or carboxyl group at one end of the intermediate polymer, and the active monomer containing the X group refers to a monomer containing an X group and an active functional group that can react with the carboxyl group or amino group at the other end of the intermediate polymer. The active functional group that reacts with the amino group is optionally any one of an epoxy group, a carboxyl group, anhydride, an isocyanate group, carbonyl chloride, and a halogen atom. The active functional group that reacts with the carboxyl group is optionally a hydroxyl group or an amino group.

In the present application, the polymer is prepared by condensation reaction and end group reaction, the preparation method is simple, and the production efficiency is improved.

In some embodiments, the end groups of the intermediate polymers are amino groups, and the active monomer containing the X' group refer to an active monomer containing an X' group and a halogen atom.

In some embodiments, the end groups of the intermediate polymers are amino groups, and the active monomer containing the X group refer to an active monomer containing an X group and a halogen atom.

In some embodiments, the end groups of the intermediate polymers are amino groups, and the active monomer containing the X' group refers to X'-$(CH_2)$m-A, where m is an integer between 1 and 12, and A is F, Cl, Br, or I.

In some embodiments, the end groups of the intermediate polymers are amino groups, and the active monomer containing the X group refers to X-$(CH_2)$n-B, where n is an integer between 1 and 12, and B is F, Cl, Br, or I.

In some embodiments, the preparation of the polymer is shown by the following:

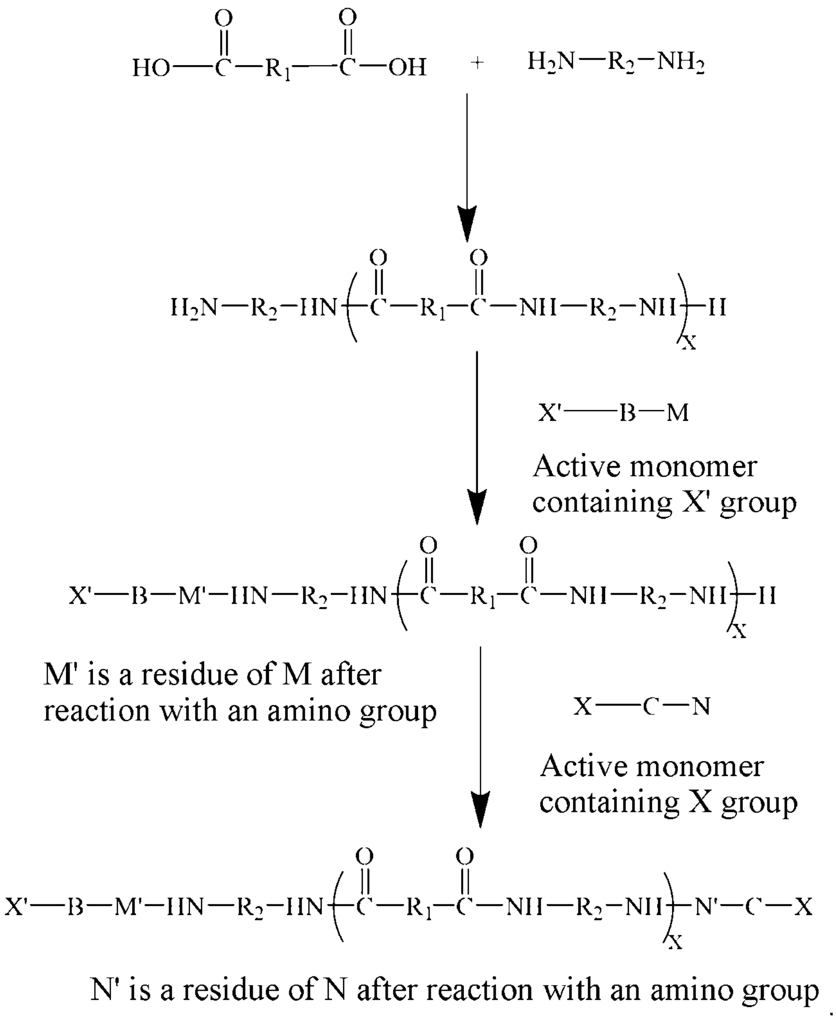


In some embodiments, the preparation of the polymer is shown by the following:

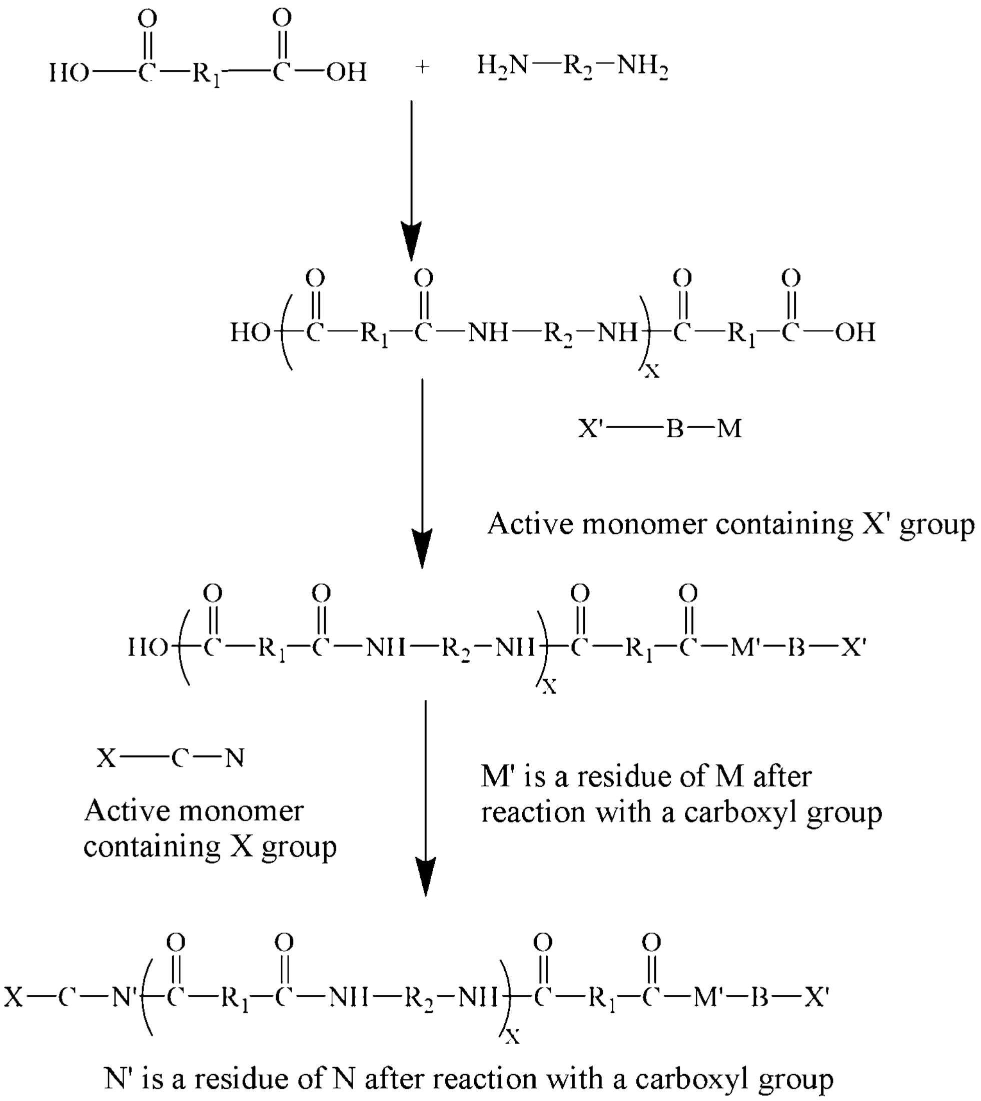


In some embodiments, the catalyst includes sodium hypophosphite.

In some embodiments, a dispersant is provided, which includes the polymer in any of embodiments or the polymer prepared by the preparation method in any of embodiments.

In some embodiments, application of the polymer in any of embodiments to a secondary battery is provided.

[Positive electrode slurry]

In some embodiments, a positive electrode slurry is provided, which includes a positive electrode active material, a conductive agent, a binder, and a dispersant, where the dispersant includes the polymer in any of embodiments.

The positive electrode slurry has excellent dispersibility and high solid content, thereby helping to prepare high-performance electrode plates.

In some embodiments, the positive electrode active material may be a positive electrode active material for batteries known in the art. As an example, the positive electrode active material may include at least one of the following materials: lithium-containing phosphate with an olivine structure, lithium transition metal oxide, and respective modified compounds thereof. However, the present application is not limited to these materials, and other conventional materials used as positive electrode active materials for batteries may also be used. These positive electrode active materials may be used alone, or more than two thereof may be used jointly. Examples of the lithium transition metal oxide may include, but not limited to, at least one of lithium cobalt oxide (such as $LiCoO_2$), lithium nickel oxide (such as $LiNiO_2$), lithium manganese oxide (such as $LiMnO_2$ and $LiMn_2O_4$), lithium nickel cobalt oxide, lithium manganese cobalt oxide, lithium nickel manganese oxide, lithium nickel cobalt manganese oxide (such as $LiNi_{1/3}Co_{1/3}Mn_{/3}O_2$ (also known as $NCM_{333}$), $LiNi_{0.5}Co_{0.2}Mn_{0.3}O_2$ (also known as $NCM_{523}$), $LiNi_{0.5}Co_{0.25}Mn_{0.25}O_2$ (also known as $NCM_{211}$), $LiNi_{0.6}Co_{0.2}Mn_{0.2}O_2$ (also known as $NCM_{622}$), and $LiNi_{0.8}Co_{0.1}Mn_{0.1}O_2$ (also known as $NCM_{811}$)), lithium nickel cobalt aluminum oxide (such

as $LiNi_{0.85}Co_{0.15}Al_{0.05}O_2$), and modified compounds thereof. Examples of the lithium-containing phosphate with the olivine structure may include, but not limited to, at least one of lithium iron phosphate (such as $LiFePO_4$ (also known as LFP)), a composite material of lithium iron phosphate and carbon, lithium manganese phosphate (such as $LiMnPO_4$), a composite material of lithium manganese phosphate and carbon, lithium iron manganese phosphate, and a composite material of lithium manganese iron phosphate and carbon.

In some embodiments, the positive electrode slurry includes a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode active material includes lithium iron phosphate with a carbon coating layer on a surface.

On the one hand, the structural unit expressed by formula II in the L chain segment contains an amide group, and the oxygen and nitrogen atoms on the amide group can coordinate with the iron atoms in lithium iron phosphate. On the other hand, the oxygen and nitrogen atoms on the amide group can produce hydrogen bonding with the carboxyl group or the hydroxyl group in the carbon coating layer. The combined effect of the two improves the dispersibility of the polymer in the slurry, making the polymer dispersant have excellent dispersibility on the slurry system using lithium iron phosphate with the carbon coating layer on the surface as the positive electrode active material.

In some embodiments, a graphitization degree of lithium iron phosphate with the carbon coating layer on the surface is 10%-30%.

In some embodiments, the graphitization degree of lithium iron phosphate with the carbon coating layer on the surface is optionally any one of 10%, 15%, 20%, 25%, and 30%, or within a range formed by any two thereof.

In the present application, the term "graphitization degree" refers to the graphitization degree of carbon components, reflecting the integrity of the graphite crystal structure in carbon-coated lithium iron phosphate, especially in the carbon coating layer, that is, the regularity of the arrangement of carbon atoms in the graphite structure.

Herein, the graphitization degree of lithium iron phosphate may be tested by using any method known in the art, such as Raman spectroscopy. Specifically, the graphitization degree may be characterized by using HORIBA Jobin Yvon high-resolution Raman spectrometer from France, with the model of LabRAM HR Evlution. After deducting the detection background, the following Gaussian function is used for fitting. Raman spectroscopy testing conditions are as follows: wavelength: 532 nm, scanning range: 200-4000 $cm^{-1}$, accumulating twice, measuring 10 points per sample, taking the average for fitting:

$$G(\nu) = A_i \exp\left[-4\ln(2)\left(\frac{\nu - \nu_i}{w_i}\right)^2\right]$$

In the above formula, G is the graphitization degree, and Ai, Vi, and wi are peak intensity, peak position, and peak width, respectively.

In the related art, in order to improve the electronic and ionic conductivity of lithium iron phosphate, carbon coating is performed on the surface of the positive electrode active material. However, there are many kinds of lithium iron phosphate coating processes in the existing market, the extents of carbon coating on the surface are different, the graphitization degrees of lithium iron phosphate are different, and the existing dispersants are not suitable for the slurry using lithium iron phosphate with different graphitization degrees as the positive electrode active material. However, the polymer dispersant in the present application has universality, and can improve the dispersibility of the slurry using lithium iron phosphate with different graphitization degrees as the positive electrode active material, increase the solid content of the slurry, slow down the gel phenomenon of the slurry, reduce the film resistance of the electrode plate, improve the flexibility of the electrode plate, and improve the first coulombic efficiency and high temperature cycling performance of the battery. The polymer dispersant has universality for positive electrode slurries containing lithium iron phosphate with different graphitization degrees produced by different processes, thereby helping to reduce the preparation cost and improve the production efficiency.

In some embodiments, a mass fraction of the dispersant is 0.01%-3% based on a total mass of solid materials in the positive electrode slurry.

In some embodiments, based on the total mass of solid materials in the positive electrode slurry, the mass fraction of the dispersant is optionally any one of 0.01%, 0.1%, 0.5%, 1%, 1.5%, 2%, 2.5%, and 3%, or within a range formed by any two thereof.

The mass fraction of the dispersant is within an appropriate range, so that the slurry has high solid content, the electrode plate has excellent flexibility, and the battery has excellent first coulombic efficiency and high temperature storage performance.

In some embodiments, the mass fraction of the dispersant is 0.03%-2% based on the total mass of solid materials in the positive electrode slurry.

In some embodiments, based on the total mass of solid materials in the positive electrode slurry, the mass fraction of the dispersant is optionally any one of 0.03%, 0.1%, 0.5%, 1%, 1.5%, and 2%, or within a range formed by any two thereof.

The mass fraction of the dispersant is within an appropriate range, thereby further improving the flexibility of the electrode plate and improving the high temperature storage performance of the battery.

[Positive electrode plate]

The positive electrode plate includes a positive electrode current collector and a positive electrode film arranged on at least one surface of the positive electrode current collector. The positive electrode film is prepared from the positive electrode slurry in any of embodiments.

As an example, the positive electrode current collector has two opposite surfaces in its own thickness direction, and the positive electrode film is arranged on either or both of the two opposite surfaces of the positive electrode current collector.

In some embodiments, the positive electrode current collector may be a metal foil or a composite current collector. For example, as the metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the positive electrode plate may be prepared through the following method: dispersing the above components for preparing the positive electrode plate, for example, the positive electrode active material, the conductive agent, the binder, and any other components, in a solvent (for example, N-methylpyrrolidone) to form a positive electrode slurry; and coating the positive electrode slurry on a positive electrode current collector, followed by processes such as oven drying and cold pressing, to obtain the positive electrode plate.

[Negative electrode plate]

The negative electrode plate includes a negative electrode current collector and a negative electrode film layer arranged on at least one surface of the negative electrode current collector. The negative electrode film layer includes a negative electrode active material.

As an example, the negative electrode current collector has two opposite surfaces in its own thickness direction, and the negative electrode film layer is arranged on either or both of the two opposite surfaces of the negative electrode current collector.

In some embodiments, the negative electrode current collector may be a metal foil or a composite current collector. For example, as the metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material for batteries well-known in the art. As an example, the negative electrode active material may include at least one of the following materials: artificial graphite, natural graphite, soft carbon, hard carbon, a silicon-based material, a tin-based material, and lithium titanate. The silicon-based material may be at least one selected from the group consisting of elemental silicon, silicon oxide, a silicon-carbon composite, a silicon-nitrogen composite, and silicon alloy. The tin-based material may be at least one selected from the group consisting of elemental tin, a tin oxide compound, and tin alloy. However, the present application is not limited to these materials, and other conventional materials used as negative electrode active materials for batteries may also be used. These negative electrode active materials may be used alone, or more than two thereof may be used jointly.

In some embodiments, the negative electrode film layer further optionally includes a binder. The binder may be at least one selected from the group consisting of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be at least one selected from the group consisting of superconducting carbon, acetylene black,

carbon black, Ketjen black, carbon dot, carbon nanotube, graphene, and carbon nanofiber.

In some embodiments, the negative electrode film layer further optionally includes other adjuvants such as a thickener (for example, sodium carboxymethyl cellulose (CMC-Na)).

In some embodiments, the negative electrode plate may be prepared by the following method: dispersing the above components for preparing the negative electrode plate, for example, the negative electrode active material, the conductive agent, the binder, and any other components, in a solvent (for example, deionized water) to form a negative electrode slurry; coating the negative electrode slurry on a negative electrode current collector, followed by processes such as oven drying and cold pressing, to obtain the negative electrode plate.

[Electrolyte]

The electrolyte plays a role in conducting ions between the positive electrode plate and the negative electrode plate. The type of the electrolyte is not specifically limited in the present application, which may be selected according to the requirements. For example, the electrolyte may be liquid, gelled, or all solid.

In some embodiments, the electrolyte is an electrolyte solution. The electrolyte solution includes an electrolyte salt and a solvent.

In some embodiments, the electrolyte salt may be at least one selected from the group consisting of lithium hexafluorophosphate, lithium tetrafluoroborate, lithium perchlorate, lithium hexafluoroborate, lithium bis(fluorosulfonyl) imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be at least one selected from the group consisting of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolytic solution further optionally includes an additive. For example, the additive may include a negative electrode film forming additive and a positive electrode film forming additive, and may further include an additive that can improve particular performance of the battery, for example, an additive that improves the overcharging performance of the battery, an additive that improves high or low temperature performance of the battery, or the like.

[Separator]

In some embodiments, the secondary battery further includes a separator. The type of the separator is not particularly limited in the present application, and any well-known porous separator with good chemical stability and mechanical stability may be selected.

In some embodiments, the material of the separator may be at least one selected from the group consisting of glass fiber, non-woven fabric, polyethylene, polypropylene, and polyvinylidene fluoride. The separator may be a single-layer film or a multilayer composite film, which is not specially limited. In a case that the separator is a multilayer composite film, materials of layers may be the same or different, which is not specially limited.

In some embodiments, the positive electrode plate, the negative electrode plate, and the separator may be made into an electrode assembly through a winding process or a lamination process.

In some embodiments, the secondary battery may include an outer package. The outer package may be used to encapsulate the above electrode assembly and electrolyte.

In some embodiments, the outer package of the secondary battery may be a hard case, such as a hard plastic case, an aluminum case, or a steel case. The outer package of the secondary battery may alternatively be a soft package, such as a pouch-type soft package. The material of the soft package may be plastic, and examples of plastic may include polypropylene, polybutylene terephthalate, polybutylene succinate, and the like.

[Secondary battery]

The shape of the secondary battery is not particularly limited in the present application, and the secondary battery may be cylindrical, prismatic, or in any other shape. For example, FIG. 1 shows a cuboidal secondary battery 5 as an example. The secondary battery may be a sodium-ion battery, a magnesium-ion battery, or a potassium ion battery.

In some embodiments, referring to FIG. 2, the outer package may include a case 51 and a cover plate 53. The case 51 may include a bottom plate and side plates connected to the bottom plate, and the bottom plate and the side plates form an accommodating cavity. The case 51 is provided with an opening in communication with the accommodating cavity,

and the cover plate 53 may cover the opening to close the accommodating cavity. The positive electrode plate, the negative electrode plate, and the separator may form an electrode assembly 52 through a winding process or a lamination process. The electrode assembly 52 is encapsulated in the accommodating cavity. An electrolytic solution infiltrates into the electrode assembly 52. The number of the electrode assemblies 52 included in the secondary battery 5 may be one or more, which may be selected by those skilled in the art according to the specific actual requirements.

[Battery module]

In some embodiments, the secondary battery may be assembled into a battery module, the battery module may include one or more secondary batteries, and the specific number may be selected by those skilled in the art according to the application and capacity of the battery module.

FIG. 3 shows a battery module 4 as an example. Referring to FIG. 3, in the battery module 4, multiple secondary batteries 5 may be sequentially arranged along a length direction of the battery module 4. Of course, they may also be arranged in any other way. Further, the multiple secondary batteries 5 may be secured through fasteners.

Optionally, the battery module 4 may further include a shell with an accommodating space, and the multiple secondary batteries 5 are accommodated in the accommodating space.

[Battery pack]

In some embodiments, the battery module may also be assembled into a battery pack, the number of the battery modules included in the battery pack may be one or more, and the specific number may be selected by those skilled in the art according to the application and capacity of the battery pack.

FIG. 4 and FIG. 5 show a battery pack 1 as an example. Referring to FIG. 4 and FIG. 5, the battery pack 1 may include a battery box and multiple battery modules 4 arranged in the battery box. The battery box includes an upper box body 2 and a lower box body 3. The upper box body 2 can cover the lower box body 3 to form a closed space for accommodating the battery modules 4. The multiple battery modules 4 may be arranged in the battery box in any way.

[Power consuming apparatus]

In an embodiment of the present application, a power consuming apparatus is provided, which includes a secondary battery in any of embodiments, a battery module in any of embodiments, or a battery pack in any of embodiments.

The power consuming apparatus includes at least one of the secondary battery, the battery module, or the battery pack provided in the present application. The secondary battery, the battery module, or the battery pack may be used as a power source of the power consuming apparatus, and may also be used as an energy storage unit of the power consuming apparatus. The power consuming apparatus may include, but not limited to, a mobile device (for example, a mobile phone or a laptop), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

The secondary battery, the battery module, or the battery pack may be selected according to the use requirements of the power consuming apparatus.

FIG. 6 shows a power consuming apparatus as an example. The power consuming apparatus is an all-electric vehicle, a hybrid electric vehicle, or a plug-in hybrid electric vehicle. To meet the requirements of the power consuming apparatus for high power and high energy density of secondary batteries, a battery pack or a battery module may be adopted.

As another example, the apparatus may be a mobile phone, a tablet computer, a laptop, or the like. The apparatus is generally required to be light and thin, and may use a secondary battery as a power source.

Examples

Examples of the present application will be described below. The examples described below are exemplary and only intended to explain the present application, and cannot be construed as limitations on the present application. If the specific technologies or conditions are not specified in the examples, the technologies or conditions described in the literature in the art or the product manual shall be followed. The used reagents or instruments without manufacturers indicated are all conventional products that may be purchased in the market.

**I. Preparation method**

Example 1

1) Preparation of intermediate polymer: a diacid and a diamine were weighed according to a molar ratio of 1:1.2 and added to a three-necked flask, and deionized water with a mass which was 8 times the monomer mass and sodium hypophosphite with a mass which was 0.15% of the monomer mass were added. A reactor was sealed, vacuumed, and filled with nitrogen gas. This process was repeated three times. Then, the temperature was increased to 180°C for constant-temperature reaction for 1 h. Then, the temperature was increased to 230°C for reaction for 2 h. Vacuum pumping to 0.01 atm was performed and the temperature was increased to 270°C for reaction for 4 h. Then, a heat source was removed and the vacuum was maintained. After the reactor cooled down, a product was taken out to obtain an intermediate polymer with amino groups at ends. The structural formulas of the diacid and the diamine were shown below:

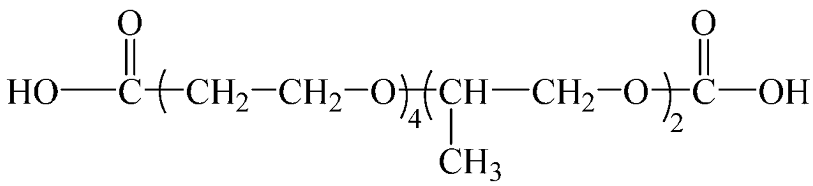

diacid

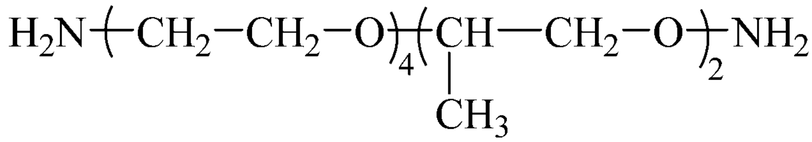

diamine

2 mol of the intermediate polymer with amino groups at two ends and 1 mol of 1-chlorododecane were dissolved in 1000 ml of dichloromethane for halogenation reaction at room temperature. After reaction for 6 h, 500 ml of deionized water were added to quench the reaction. The reaction mixture was extracted three times in dichloromethane, an oil phase product was collected and dried with magnesium sulfate, the product was separated through rotary evaporation, and finally chromatography column separation was performed to obtain a first product.

1 mol of the first product and 1.5 mol of Cl-$C_4H_8$-COOH were dissolved in 1000 ml of dichloromethane for halogenation reaction at room temperature. After reaction for 6 h, 500 ml of deionized water were added to quench the reaction. The reaction mixture was extracted three times in dichloromethane, an oil phase product was collected and dried with magnesium sulfate, the product was separated through rotary evaporation, and finally chromatography column separation was performed to obtain a polymer dispersant P-1.

The reaction process for preparing the polymer dispersant P-1 was shown by the following:

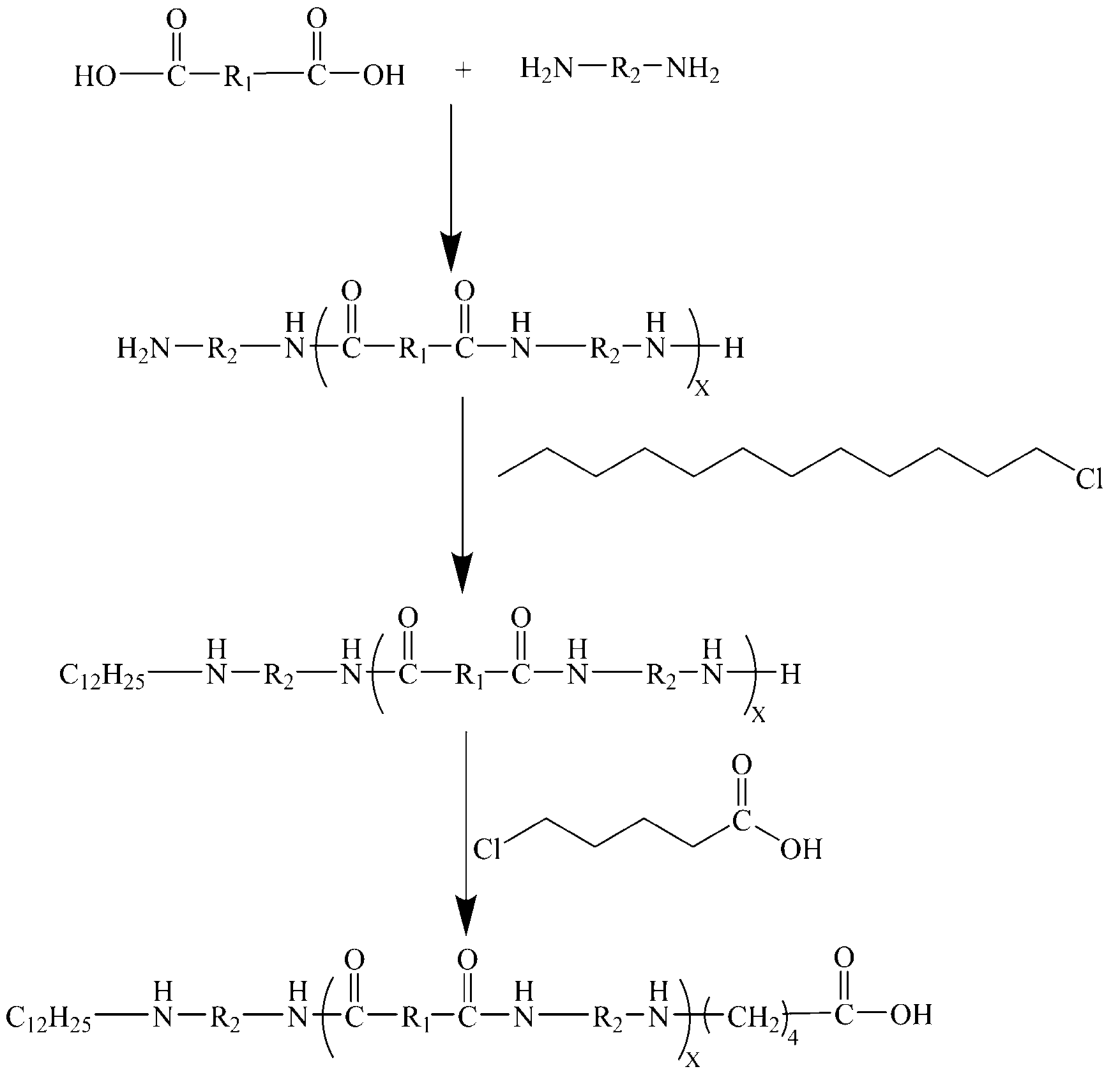

,

where

$R_1$ and $R_2$ are

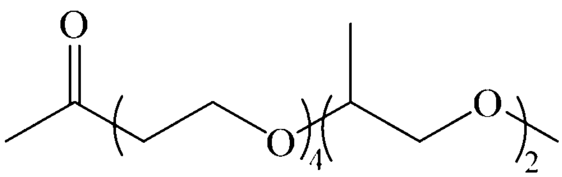

.

2) Preparation of positive electrode slurry

Lithium iron phosphate coated with positive electrode active material carbon (LFP@C), a conductive agent acetylene black (SP), a binder polyvinylidene fluoride (PVDF), and the dispersant (P-1) were added to N-methylpyrrolidone (NMP), and stirring was performed to obtain a positive electrode slurry, where the weight ratio of LFP@C to SP to PVDF was 97:2:1, and the mass fraction of the dispersant was 1.5% of the total mass of the positive electrode active material, the conductive agent, the binder, and the dispersant, and the theoretical solid content of the positive electrode slurry was 60%. After stirring, the viscosity of the slurry was tested and controlled to be less than 20000 mPa·s. If the viscosity was high, NMP was added according to the minimum amount to make the viscosity of the slurry lower than 20000 mPa·s.

3) Preparation of positive electrode plate

The positive electrode slurry was uniformly coated on two surfaces of a positive electrode current collector which was an aluminum foil, then drying was performed to obtain a film layer; then cold pressing and cutting were performed to obtain a positive electrode plate.

4) Preparation of negative electrode plate

A negative electrode active material artificial graphite, a conductive agent acetylene black, a styrene-butadiene rubber (SBR) binder, and a thickener sodium carboxymethyl cellulose (CMC-Na) were dissolved in deionized water according to a weight ratio of 96:2:1:1, uniform mixing was performed to obtain a negative electrode slurry, the negative electrode slurry was coated on a copper foil used as a negative electrode current collector, and then oven drying, cold pressing and cutting were performed to obtain a negative electrode plate.

5) Separator

A polypropylene film was used as a separator.

6) Preparation of electrolytic solution

In an argon atmosphere glove box ($H_2O$<0.1 ppm, $O_2$<0.1 ppm), organic solvents ethylene carbonate (EC) and ethyl methyl carbonate (EMC) were mixed uniformly according to a volume ratio of 3:7, and $LiPF_6$ lithium salt was dissolved in the organic solvents to prepare a 12.5% solution to obtain the electrolyte solution.

7) Preparation of secondary battery

The positive electrode plate, separator and negative electrode plate prepared in Example 1 were stacked sequentially, so that the separator was located between the positive electrode plate and the negative electrode plate to play a role of separation, then winding was performed to obtain a bare battery cell, the bare battery cell was welded with tabs and contained into an aluminum case, baking was performed at 80°C to remove water, then the electrolyte solution was immediately injected, and sealing was performed to obtain an uncharged battery. The uncharged battery was then subjected to processes such as standing, hot and cold pressing, chemical formation, shaping, and capacity testing in sequence to obtain a lithium-ion battery product of Example 1.

Examples 2-12

The preparation method for batteries of Examples 2-12 was similar to that of Example 1, but the type of the anchoring and end capping agent was adjusted to adjust the structural formulas of the polymers. The specific adjustment parameters were shown in Table 1.

Table 1

| | Anchoring and end capping agent | Structural formula of polymer |
|---|---|---|
| Example 1 | $Cl-(CH_2)_4-COOH$ | 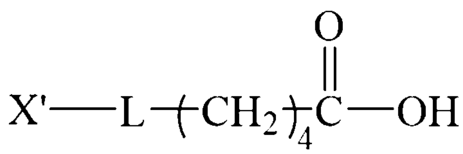 |
| Example 2 | $Cl-(CH_2)_4-SO_3H$ | 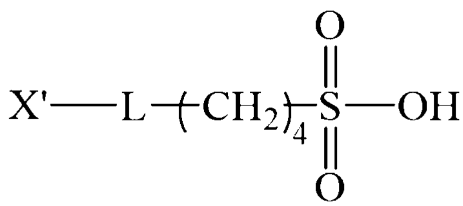 |

(continued)

| | Anchoring and end capping agent | Structural formula of polymer |
|---|---|---|
| Example 3 | 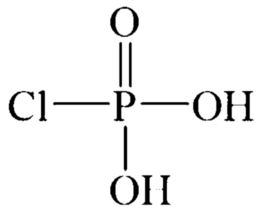 | 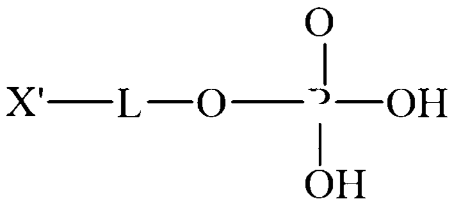 |
| Example 4 | 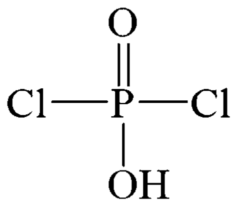 | 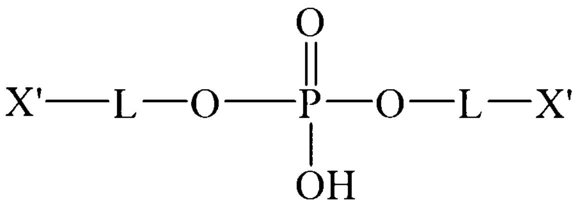 |
| Example 5 | $Cl-(CH_2)_4-COO-C_3H_7$ | 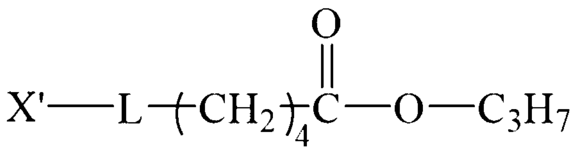 |
| Example 6 | $Cl-(CH_2)_4-SO_3-C_3H_7$ | 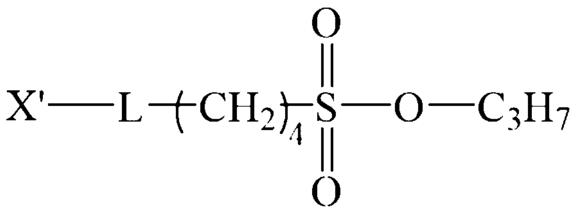 |
| Example 7 | 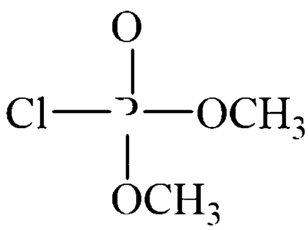 | 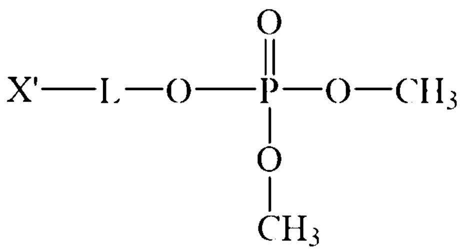 |
| Example 8 | 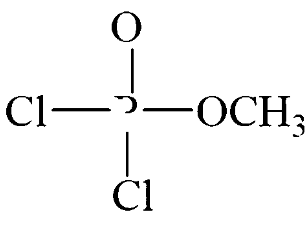 | 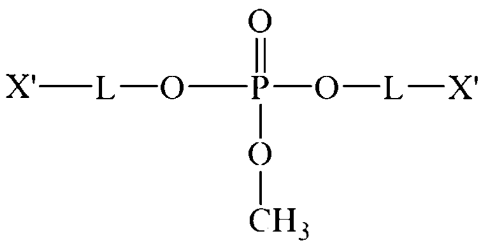 |
| Example 9 | $Cl-(CH_2)_4-COO-(CH_2)_3-OH$ | 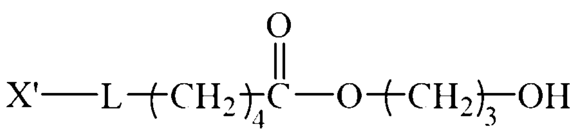 |
| Example 10 | $Cl-(CH_2)_4-COO-NH-(CH_2)_3-OH$ | 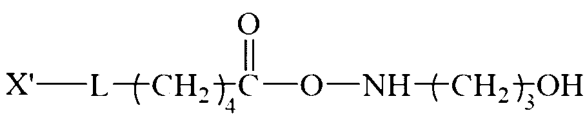 |

(continued)

| | Anchoring and end capping agent | Structural formula of polymer |
|---|---|---|
| Example 11 | 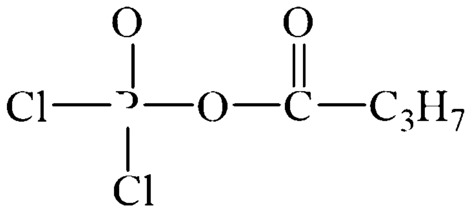 | 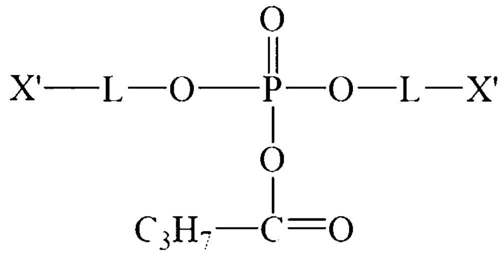 |
| Example 12 | 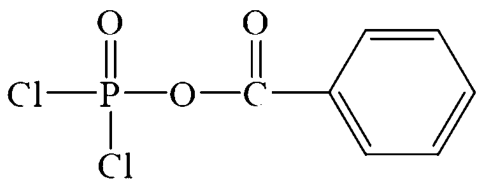 | 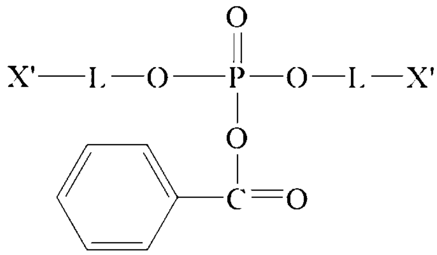 |

In the structures of the polymers of Examples 1-12, X' contained $-C_{12}H_{25}$, and the L chain segments contained

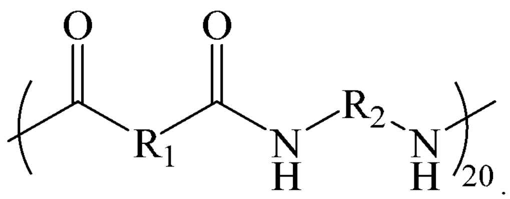

Examples 13-16

The preparation method for batteries of Examples 13-16 was similar to that of Example 1, but the types of the diacid and the diamine were adjusted to adjust the structures of $R_1$ and $R_2$ in the polymers. The specific adjustment parameters were shown in Table 2. Corresponding groups $R_1$ and $R_2$ were shown in Table 3.

Table 2

| S/N | Diacid | Diamine |
|---|---|---|
| Example 13 | $HOOC-(EO)_4-COOH$ | $H_2N-(EO)_4-(PO)_2-NH_2$ |
| Example 14 | $HOOC-(CH_2)_6-COOH$ | $H_2N-(EO)_4-(PO)_2-NH_2$ |
| Example 15 | $HOOC-(EO)_4-(PO)_2-COOH$ | $H_2N-(CH_2)_6-NH_2$ |
| Example 16 | $HOOC-(EO)_4-(PO)_2-COOH$ | $H_2N-(EO)_4-NH_2$ |

Table 3

| S/N | $R_1$ | $R_2$ |
|---|---|---|
| Example 13 | $-(EO)_4-$ | $-(EO)_4-(PO)_2-$ |
| Example 14 | $-(CH_2)_6-$ | $-(EO)_4-(PO)_2-$ |
| Example 15 | $-(EO)_4-(PO)_2-$ | $-(CH_2)_6-$ |
| Example 16 | $-(EO)_4-(PO)_2-$ | $-(EO)_4-$ |

Examples 17-22

Compared with Example 1, the repetition number of the structural units expressed by formula II were adjusted by adjusting the preparation parameters of the polymers. The specific preparation method was as follows:

Example 17

Compared with Example 1, the process of preparing the intermediate polymer was specifically adjusted as follows:
A diacid and a diamine were weighed according to a molar ratio of 1:1.2 and added to a three-necked flask, and deionized water with a mass which was 8 times the monomer mass and sodium hypophosphite with a mass which was 0.15% of the monomer mass were added. A reactor was sealed, vacuumed, and filled with nitrogen gas. This process was repeated three times. Then, the temperature was increased to 100°C for constant-temperature reaction for 1 h. Vacuum pumping to 0.01 atm was performed and the temperature was increased to 120°C for reaction for 2 h. Then, a heat source was removed and the vacuum was maintained. After the reactor cooled down, a product was taken out to obtain an intermediate polymer.

Example 18

Compared with Example 1, the process of preparing the intermediate polymer was specifically adjusted as follows:
A diacid and a diamine were weighed according to a molar ratio of 1: 1.2 and added to a three-necked flask, and deionized water with a mass which was 8 times the monomer mass and sodium hypophosphite with a mass which was 0.15% of the monomer mass were added. A reactor was sealed, vacuumed, and filled with nitrogen gas. This process was repeated three times. The temperature was increased to 100°C for constant-temperature reaction for 1 h. Vacuum pumping to 0.01 atm was performed and the temperature was increased to 120°C for reaction for 4 h. Then, a heat source was removed and the vacuum was maintained. After the reactor cooled down, a product was taken out to obtain an intermediate polymer.

Example 19

Compared with Example 1, the process of preparing the intermediate polymer was specifically adjusted as follows:
A diacid and a diamine were weighed according to a molar ratio of 1:1.2 and added to a three-necked flask, and deionized water with a mass which was 8 times the monomer mass and sodium hypophosphite with a mass which was 0.15% of the monomer mass were added. A reactor was sealed, vacuumed, and filled with nitrogen gas. This process was repeated three times. Then, the temperature was increased to 180°C for constant-temperature reaction for 2 h. Then, the temperature was increased to 230°C for reaction for 5 h. Vacuum pumping to 0.01 atm was performed and the temperature was increased to 300°C for reaction for 12 h. Then, a heat source was removed and the vacuum was maintained. After the reactor cooled down, a product was taken out to obtain an intermediate polymer.

Example 20

Compared with Example 1, the process of preparing the intermediate polymer was specifically adjusted as follows:
A diacid and a diamine were weighed according to a molar ratio of 1:1.2 and added to a three-necked flask, and deionized water with a mass which was 8 times the monomer mass and sodium hypophosphite with a mass which was 0.15% of the monomer mass were added. A reactor was sealed, vacuumed, and filled with nitrogen gas. This process was repeated three times. Then, the temperature was increased to 180°C for constant-temperature reaction for 2 h. Then, the temperature was increased to 230°C for reaction for 5 h. Vacuum pumping to 0.01 atm was performed and the temperature was increased to 300°C for reaction for 24 h. Then, a heat source was removed and the vacuum was maintained. After the reactor cooled down, a product was taken out to obtain an intermediate polymer.

Example 21

Compared with Example 1, the process of preparing the intermediate polymer was specifically adjusted as follows:
A diacid and a diamine were weighed according to a molar ratio of 1:1.2 and added to a three-necked flask, and deionized water with a mass which was 8 times the monomer mass and sodium hypophosphite with a mass which was 0.15% of the

monomer mass were added. A reactor was sealed, vacuumed, and filled with nitrogen gas. This process was repeated three times. Then, the temperature was increased to 180°C for constant-temperature reaction for 1 h. Then, the temperature was increased to 230°C for reaction for 2 h. Vacuum pumping to 0.01 atm was performed and the temperature was increased to 270°C for reaction for 3 h. Then, a heat source was removed and the vacuum was maintained. After the reactor cooled down, a product was taken out to obtain an intermediate polymer.

Example 22

Compared with Example 1, the process of preparing the intermediate polymer was specifically adjusted as follows:
A diacid and a diamine were weighed according to a molar ratio of 1:1.2 and added to a three-necked flask, and deionized water with a mass which was 8 times the monomer mass and sodium hypophosphite with a mass which was 0.15% of the monomer mass were added. A reactor was sealed, vacuumed, and filled with nitrogen gas. This process was repeated three times. Then, the temperature was increased to 180°C for constant-temperature reaction for 1 h. Then, the temperature was increased to 230°C for reaction for 5 h. Vacuum pumping to 0.01 atm was performed and the temperature was increased to 300°C for reaction for 8 h. Then, a heat source was removed and the vacuum was maintained. After the reactor cooled down, a product was taken out to obtain an intermediate polymer.

Examples 23-27

Compared with Example 1, the mass fractions of the polymer dispersants were specifically adjusted as in Table 5.

Examples 28-31

Compared with Example 1, the graphitization degrees of lithium iron phosphate were specifically adjusted as in Table 5.

Example 32

Compared with Example 1, the positive electrode active material was adjusted to $LiNi_{0.6}Co_{0.2}Mn_{0.2}O_2$ coated with carbon (NCM@C).

Example 33

Compared with Example 1, the structural formula of the diamine was adjusted. The structural formula of the diamine was shown by the following:

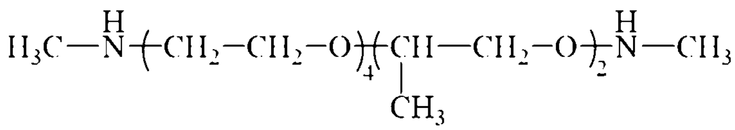

Examples 34-36

The preparation method for batteries of Examples 34-36 was similar to that of Example 1, but the types of the diacid and the diamine were adjusted to adjust the structures of $R_1$ and $R_2$ in the polymers. The specific adjustment parameters were shown in Table 4. Corresponding groups $R_1$ and $R_2$ were shown in Table 5. The diamine in Example 35 was p-phenylenediamine, and the diacid in Example 36 was terephthalic acid.

Table 4

| S/N | Diacid | Diamine |
|---|---|---|
| Example 34 | $HOOC-(CH_2)_6-COOH$ | $H_2N-(CH_2)_6-NH_2$ |
| Example 35 | $HOOC-(EO)_4-(PO)_2-COOH$ | $H_2N-Ph-NH_2$ |
| Example 36 | HOOC-Ph-COOH | $H_2N-(EO)_4-(PO)_2-NH_2$ |

Table 5

| S/N | $R_1$ | $R_2$ |
|---|---|---|
| Example 34 | $-(CH_2)_6-$ | $-(CH_2)_6-$ |
| Example 35 | $-(EO)_4-(PO)_2-$ | -Ph- |
| Example 36 | -Ph- | $-(EO)_4-(PO)_2-$ |

Comparative Examples 1-4

Compared with Example 1, the dispersant was replaced with polyvinylpyrrolidone (PVP), and the graphitization degree of lithium iron phosphate was adjusted.

Comparative Example 5

Compared with Example 1, the dispersant was replaced with a polymer dispersant D-1, whose structural formula was $C_{12}H_{25}-O-(EO)_{80}-(PO)_{40}-(CH_2)_4-COOH$. The preparation process was specifically as follows:
1 mol of $C_{12}H_{25}-OH$ was used as a starting agent, KOH with an amount which was 0.5% of the mass of the starting agent was used as a catalyst, a system was vacuumed and filled with nitrogen gas, then a reaction apparatus was heated to 130°C and subjected to vacuum pumping, then 85 mol of ethylene oxide gas was fed, the pressure inside the reaction apparatus was maintained below 0.3 Mpa, the reaction was carried out at this pressure and temperature for 1 h, and cooling was performed to obtain a first product. Then, KOH with an amount which was 0.5% of the mass of the starting agent was added, the system was vacuumed and filled with nitrogen gas, then the reaction apparatus was heated to 130°C and subjected to vacuum pumping, then 45 mol of propylene oxide gas was fed for reaction for 1 h, cooling was performed to obtain a product, neutralization was further performed through acid washing, extraction was performed three times with dichloromethane, and drying, filtering and rotary evaporation were performed to obtain an intermediate product.
1 mol of the intermediate product and 1.5 mol of an anchoring and end capping agent $Cl-C_4H_8-COOH$ were dissolved in 1000 ml of dichloromethane for halogenation reaction at room temperature. After reaction for 6 h, 500 ml of deionized water were added to quench the reaction. The reaction mixture was extracted three times in dichloromethane, an oil phase product was collected and dried with magnesium sulfate, the product was separated through rotary evaporation, and finally chromatography column separation was performed to obtain a polymer dispersant D-1.

Comparative Example 6

Compared with Example 1, the dispersant was replaced with a polymer dispersant D-2, and the anchoring and end capping agent in the preparation process was adjusted to $Cl-C_4H_8-CH_3$.

**II. Performance testing**

1. Characterization of polymer

1) Weight average molecular weight

A Waters 2695 Isostatic HPLC gel chromatograph (differential refractive detector 2141) was adopted. A polystyrene solution sample with a mass fraction of 3.0% was used as a reference, and a matching chromatographic column (oil: Styragel HT5 DMF7.8*300 mm+Styragel HT4) was selected. A 3.0% fluoropolymer solution was prepared by using purified N-methylpyrrolidone (NMP). The prepared solution was stood for one day for future use. During testing, first, a syringe was used to suck tetrahydrofuran to perform rinsing for several times. Then, 5 ml of experimental solution were taken, air in the syringe was removed, and a needle tip was wiped dry. Finally, the sample solution was slowly injected into an injection port. After displayed data were stable, the data were acquired.

2) Glass transition temperature

The glass transition temperature was tested by using a differential scanning calorimeter (Q1000) of TA company. 6-9 g of the polymer sample were taken, the temperature was increased from room temperature to 200°C at a rate of 10°C/min, and an obtained differential scanning calorimetry curve was analyzed to obtain the glass transition temperature of the polymer, measured in °C.

3) Melting point

The melting point was tested by using a precision microscopic melting point tester (X-5). At one standard atmospheric pressure, 0.01 mg of a uniformly ground sample were taken and placed on a glass slide, the glass slide was covered with another glass slide and was gently compacted, and then the combination was placed at a center of a hot stage. After covering a heat shield, the focus of a microscope was adjusted until the sample could be clearly observed. Then, a temperature knob was adjusted to quickly raise the temperature until the polymer melted slightly, then the heating rate was slowly adjusted until the sample melted completely, and the full melting temperature was recorded as the melting point of the polymer, measured in °C.

4) Hydrophilic-lipophilic balance value (HLB)

It was determined by an emulsification method, whose principle was that when the polymer was used to emulsify an oily medium, if the HLB value of the polymer was the same as the HLB value required for the oil phase medium, the generated emulsion had the best stability. By mixing a standard sample with a known HLB value in proportion, the ideal HLB value could be obtained. The oil phase prepared through emulsification of the polymer was stood for 24 h. The HLB value required for the oil phase in the sample with the best stability was the HLB value of the polymer.

2. Positive electrode active material

1) Graphitization degree

The graphitization degree was characterized by using HORIBA Jobin Yvon high-resolution Raman spectrometer from France, with the model of LabRAM HR Evlution. After deducting the detection background, the following Gaussian function was used for fitting. Raman spectroscopy testing conditions were as follows: wavelength: 532 nm, scanning range: 200-4000 $cm^{-1}$, accumulating twice, measuring 10 points per sample, taking the average for fitting:

$$G(\nu) = A_i \exp\left[-4\ln(2)\left(\frac{\nu - \nu_i}{w_i}\right)^2\right]$$

In the above formula, G is the graphitization degree, and Ai, Vi, and wi are peak intensity, peak position, and peak width, respectively.

3. Positive electrode slurry

1) Solid content

A copper foil was taken and weighed in a weight loss rate measuring instrument, the reading was recorded as M0, and then zero clearing was performed.

The positive electrode slurry was taken, a small amount was coated onto the copper foil, then weighing was performed in a moisture tester, and the reading was recorded as M1.

The device was closed and oven drying was started.

After completion, the weighing data were recorded as M2, the solid content was calculated, and the solid content was (M2-M0)/(M1-M0).

2) Slurry stability testing

The slurry was re-stirred for 30 min, a certain amount of slurry was taken and poured into a sample bottle of a stability tester, then a test tower cover was closed, the test tower cover was opened, and a scanning curve started to appear on a test interface to start testing the stability of the sample, and the testing was continuously performed for more than 72 h.

4. Positive electrode plate

1) Brittleness testing

A defect-free positive electrode plate was taken and cut into samples with length*width of 20 cm*2.5 cm along a longitudinal direction, the number of the samples was greater than or equal to 8, the samples were first pre-folded in half in half and placed on a testing platform, and rolling was performed once by using a 2 kg cylindrical roller. If the sample was transparent, the number of brittle light transmission cycle was one. If the sample was not transparent, reverse folding in half and rolling were repeated. The crease was observed against light to see if it was transparent or broken, the actual number of folding times was recorded, and the average was taken as a test result.

2) Film resistance

Oven-dried positive electrode slurry (film layer) was cut from the left, middle, and right positions of the positive electrode plate, and cut into small discs with a diameter of 3 mm. An electrode plate resistance tester from Initial Energy Science & Technology Co., Ltd was powered on, the disc was placed at an appropriate position on a "probe" of the electrode plate resistance tester, the "start" button was pushed, and the reading was recorded after it was stable. Two positions on each small disc were tested, and finally the average of six measurements was calculated and taken as the resistance of the film layer of the electrode plate.

5. Secondary battery

1) First coulombic efficiency

At 25°C, the batteries of the above examples and comparative examples were charged to a voltage of 4.3 V at a constant current according to a rate of 0.1 C. The charge capacity at this time was recorded as a first cycle charge capacity of the secondary battery. After that, standing was performed for 5 min, and then the batteries were discharged to a voltage of 2.0 V at a constant current according to a rate of 0.1 C, and standing was performed for 5 min. This process was a charge-discharge cycle, and the discharge capacity at this time was recorded as a first cycle discharge capacity of the secondary battery, i.e., the initial capacity of the secondary battery.

First cycle coulombic efficiency of secondary battery (%)=first cycle discharge capacity/first cycle charge capacity × 100%.

2) 45°C cycle capacity retention rate

At 45°C, the batteries in the examples and comparative examples were charged to 3.65 V at a constant current according to a rate of 1/3 C, then charged to a current of 0.05 C at a constant voltage of 3.65 V, stood for 10 min, and discharged to 2.5 V according to a rate of 1/3 C. The obtained capacity was recorded as an initial capacity C0. The above steps were repeated on the same battery, and a discharge capacity (Cn) of the battery after an nth cycle was recorded. The capacity retention rate of the battery after each cycle was:

$$Pn = C_n / C_0 \times 100\%$$

During the testing, the first cycle corresponds to n=1, the second cycle corresponds to n=2, ... and the 100th cycle corresponds to n=100. The corresponding data of the capacity retention rate of the battery in Example 1 in Table 5 is the data measured after 300 cycles under the above testing conditions, i.e., the value of P300.

**III. Analysis of test results of examples and comparative examples**

Table 6 Parameters and performance test results of examples

| S/N | Polymer | | | | | |
|---|---|---|---|---|---|---|
| | Referred to as | Repetition number of structural units expressed by formula II | Weight average molecular weight (g/mol) | Glass transition temperature (°C) | Melting point (°C) | Hydrophilic-lipophilic balance value |
| Example 1 | P-1 | 20 | 17304 | 82 | 138 | 10.9 |
| Example 2 | P-2 | 20 | 17340 | 81 | 137 | 11.2 |
| Example 3 | P-3 | 20 | 17256 | 80 | 140 | 10.6 |
| Example 4 | P-4 | 20 | 17255 | 82 | 142 | 11.2 |
| Example 5 | P-5 | 20 | 17347 | 84 | 139 | 7.7 |
| Example 6 | P-6 | 20 | 17383 | 81 | 134 | 8.3 |
| Example 7 | P-7 | 20 | 17286 | 79 | 136 | 8.4 |
| Example 8 | P-8 | 20 | 17285 | 77 | 144 | 8 |
| Example 9 | P-9 | 20 | 17373 | 82 | 139 | 9.1 |
| Example 10 | P-10 | 20 | 17378 | 78 | 142 | 9.3 |
| Example 11 | P-11 | 20 | 17327 | 77 | 140 | 8.8 |
| Example 12 | P-12 | 20 | 17357 | 79 | 138 | 8.5 |
| Example 13 | P-13 | 20 | 14674 | 63 | 118 | 10.5 |
| Example 14 | P-14 | 20 | 13466 | 58 | 103 | 11.4 |
| Example 15 | P-15 | 20 | 13466 | 58 | 105 | 11.5 |
| Example 16 | P-16 | 20 | 14674 | 66 | 116 | 11.5 |
| Example 17 | P-17 | 3 | 1588 | 51 | 77 | 10.4 |
| Example 18 | P-18 | 8 | 3934 | 57 | 87 | 11.1 |
| Example 19 | P-19 | 80 | 48934 | 133 | 257 | 12.1 |
| Example 20 | P-20 | 100 | 69346 | 148 | 285 | 13.2 |
| Example 21 | P-21 | 15 | 8478 | 77 | 125 | 11.2 |
| Example 22 | P-22 | 50 | 36785 | 114 | 226 | 11.4 |
| Example 23 | P-1 | 20 | 17304 | 82 | 138 | 10.9 |
| Example 24 | P-1 | 20 | 17304 | 82 | 138 | 10.9 |
| Example 25 | P-1 | 20 | 1 7304 | 82 | 138 | 10.9 |
| Example 26 | P-1 | 20 | 17304 | 82 | 138 | 10.9 |
| Example 27 | P-1 | 20 | 17304 | 82 | 138 | 10.9 |
| Example 28 | P-1 | 20 | 17304 | 82 | 138 | 10.9 |
| Example 29 | P-1 | 20 | 17304 | 82 | 138 | 10.9 |
| Example 30 | P-1 | 20 | 17304 | 82 | 138 | 10.9 |
| Example 31 | P-1 | 20 | 17304 | 82 | 138 | 10.9 |
| Example 32 | P-1 | 20 | 17304 | 82 | 138 | 10.9 |
| Example 33 | P-23 | 20 | 17673 | 88 | 143 | 11.2 |
| Example 34 | P-24 | 20 | 12340 | 53 | 99 | 11.4 |
| Example 35 | P-25 | 20 | 13378 | 57 | 104 | 11.3 |
| Example 36 | P-26 | 20 | 13378 | 57 | 103 | 11.3 |

(continued)

| S/N | Polymer | | | | | |
|---|---|---|---|---|---|---|
| | Referred to as | Repetition number of structural units expressed by formula II | Weight average molecular weight (g/mol) | Glass transition temperature (°C) | Melting point (°C) | Hydrophilic-lipophilic balance value |
| Comparative example 1 | PVP | / | 20443 | / | / | 5.2 |
| Comparative example 2 | PVP | / | 20443 | / | / | 5.2 |
| Comparative example 3 | PVP | / | 20443 | / | / | 5.2 |
| Comparative example 4 | PVP | / | 20443 | / | / | 5.2 |
| Comparative example 5 | D-1 | / | 10466 | 38 | 78 | 11.4 |
| Comparative example 6 | D-2 | 20 | 17322 | 127 | 140 | 5.3 |

Table 7 Parameters and performance test results of examples

| S/N | Polymer | Positive electrode slurry | | | | | Electrode plate | | Battery | |
|---|---|---|---|---|---|---|---|---|---|---|
| | Referred to as | Positive electrode active material | Graphitization degree | Mass fraction of dispersant | Solid content | Serious gelation time (h) | Number of breakings | Film resistance (Ω) | First coulombic efficiency (%) | 45°C cycle capacity retention rate (%) |
| Example 1 | P-1 | LFP@C | 20.00% | 1.50% | 58.50% | 72 | 7 | 0.123 | 93.33 | 93.26 |
| Example 2 | P-2 | LFP@C | 20.00% | 1.50% | 58.70% | 72 | 8 | 0.137 | 93.46 | 94.53 |
| Example 3 | P-3 | LFP@C | 20.00% | 1.50% | 56.30% | 72 | 5 | 0.138 | 92.63 | 92.47 |
| Example 4 | P-4 | LFP@C | 20.00% | 1.50% | 58.70% | 72 | 7 | 0.135 | 93.37 | 93.99 |
| Example 5 | P-5 | LFP@C | 20.00% | 1.50% | 56.10% | 48 | 5 | 0.137 | 92.48 | 92.48 |
| Example 6 | P-6 | LFP@C | 20.00% | 1.50% | 56.40% | 48 | 5 | 0.147 | 92.59 | 92.27 |
| Example 7 | P-7 | LFP@C | 20.00% | 1.50% | 56.50% | 48 | 4 | 0.138 | 92.15 | 91.17 |
| Example 8 | P-8 | LFP@C | 20.00% | 1.50% | 56.30% | 48 | 4 | 0.143 | 92.36 | 92.25 |
| Example 9 | P-9 | LFP@C | 20.00% | 1.50% | 56.70% | 48 | 5 | 0.139 | 92.91 | 92.45 |
| Example 10 | P-10 | LFP@C | 20.00% | 1.50% | 56.60% | 48 | 5 | 0.143 | 92.02 | 92.56 |
| Example 11 | P-11 | LFP@C | 20.00% | 1.50% | 56.50% | 48 | 5 | 0.151 | 92.15 | 92.38 |
| Example 12 | P-12 | LFP@C | 20.00% | 1.50% | 56.10% | 48 | 5 | 0.146 | 92.37 | 93.62 |
| Example 13 | P-13 | LFP@C | 20.00% | 1.50% | 57.60% | 72 | 6 | 0.135 | 92.51 | 92.60 |
| Example 14 | P-14 | LFP@C | 20.00% | 1.50% | 55.30% | 48 | 4 | 0.147 | 91.58 | 91.47 |
| Example 15 | P-15 | LFP@C | 20.00% | 1.50% | 55.20% | 48 | 4 | 0.135 | 91.84 | 91.49 |
| Example 16 | P-16 | LFP@C | 20.00% | 1.50% | 56.70% | 72 | 6 | 0.142 | 92.38 | 92.21 |
| Example 17 | P-17 | LFP@C | 20.00% | 1.50% | 52.50% | 24 | 2 | 0.126 | 90.52 | 90.58 |
| Example 18 | P-18 | LFP@C | 20.00% | 1.50% | 54.10% | 48 | 3 | 0.136 | 90.17 | 90.61 |
| Example 19 | P-19 | LFP@C | 20.00% | 1.50% | 54.70% | 48 | 3 | 0.263 | 90.26 | 89.53 |

| | | | | | | | | | | |
|---|---|---|---|---|---|---|---|---|---|---|
| Example 20 | P-20 | LFP@C | 20.00% | 1.50% | 52.30% | 24 | 2 | 0.269 | 90.53 | 89.27 |
| Example 21 | P-21 | LFP@C | 20.00% | 1.50% | 57.90% | 72 | 6 | 0.136 | 93.71 | 93.28 |
| Example 22 | P-22 | LFP@C | 20.00% | 1.50% | 57.50% | 72 | 6 | 0.187 | 93.48 | 93.17 |
| Example 23 | P-1 | LFP@C | 20.00% | 0.01% | 52.80% | 24 | 2 | 0.259 | 90.75 | 90.04 |
| Example 24 | P-1 | LFP@C | 20.00% | 0.03% | 53.10% | 48 | 3 | 0.221 | 90.25 | 90.52 |
| Example 25 | P-1 | LFP@C | 20.00% | 0.50% | 53.90% | 48 | 3 | 0.147 | 91.81 | 91.34 |
| Example 26 | P-1 | LFP@C | 20.00% | 2% | 56.10% | 48 | 5 | 0.148 | 92.53 | 92.16 |
| Example 27 | P-1 | LFP@C | 20.00% | 3% | 54.90% | 48 | 5 | 0.176 | 90.57 | 90.27 |
| Example 28 | P-1 | LFP | | 1.50% | 58.30% | 72 | 6 | 0.171 | 93.47 | 93.11 |
| Example 29 | P-1 | LFP@C | 10.00% | 1.50% | 58.60% | 72 | 6 | 0.164 | 93.52 | 93.52 |
| Example 30 | P-1 | LFP@C | 25.00% | 1.50% | 57.80% | 72 | 7 | 0.135 | 93.46 | 93.05 |
| Example 31 | P-1 | LFP@C | 30% | 1.50% | 58.50% | 72 | 7 | 0.085 | 93.63 | 93.94 |
| Example 32 | P-1 | NCM@C | 20.00% | 1.50% | 57.60% | 72 | 6 | 0.221 | 93.94 | 93.62 |
| Example 33 | P-23 | LFP@C | 20.00% | 1.50% | 55.30% | 48 | 4 | 0.137 | 92.16 | 91.86 |
| Example 34 | P-24 | LFP@C | 20.00% | 1.50% | 54.70% | 48 | 3 | 0.141 | 90.93 | 90.87 |
| Example 35 | P-25 | LFP@C | 20.00% | 1.50% | 55.00% | 48 | 3 | 0.139 | 91.87 | 91.41 |
| Example 36 | P-26 | LFP@C | 20.00% | 1.50% | 54.90% | 48 | 3 | 0.141 | 91.03 | 91.08 |
| Comparative example 1 | PVP | LFP | | 1.50% | 51.30% | 8 | 1 | 0.421 | 89.42 | 89.43 |
| Comparative example 2 | PVP | LFP@C | 10.00% | 1.50% | 51.60% | 8 | 1 | 0.387 | 89.10 | 88.55 |
| Comparative example 3 | PVP | LFP@C | 20.00% | 1.50% | 51.10% | 8 | 2 | 0.395 | 89.33 | 88.10 |
| Comparative example 4 | PVP | LFP@C | 30.00% | 1.50% | 50.30% | 8 | 1 | 0.359 | 89.13 | 89.68 |
| Comparative example 5 | D-1 | LFP@C | 20.00% | 1.50% | 52.10% | 8 | 1 | 0.395 | 89.21 | 89.41 |
| Comparative example 6 | D-2 | LFP@C | 20.00% | 1.50% | 50.30% | 8 | 1 | 0.265 | 88.36 | 88.62 |

According to the above results, it can be seen that the polymers in Examples 1-36 include X'-L-X, where X' includes $-C_{12}H_{25}$; X includes at least one of a carboxyl group, an ester group, a sulfo group, a sulfonate group, a phospho group, and a phosphate group; and

L includes a structural unit expressed by formula II

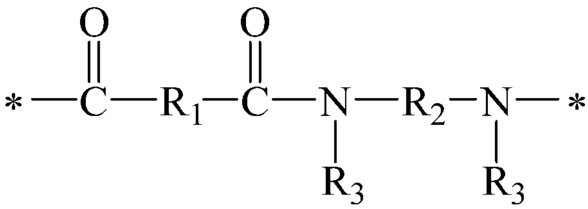,

where $R_1$ includes

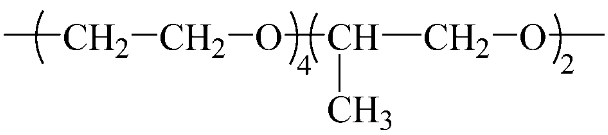, 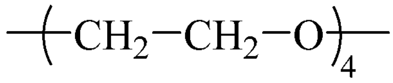

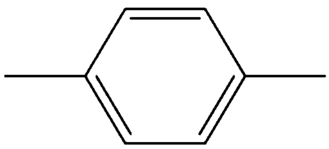, or 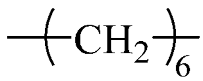,

$R_2$ includes

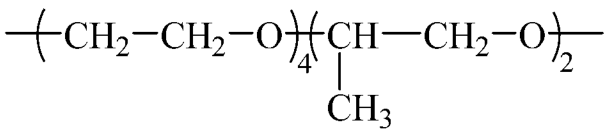, 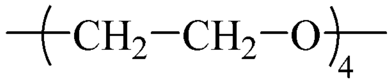,

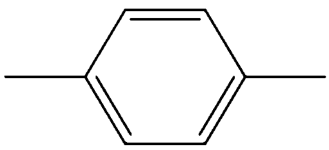, or 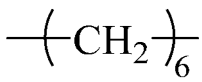,

and $R_3$ includes hydrogen or a methyl group.

From the comparison between Examples 1-22 and 33-36 and Comparative Example 3, the comparison between Example 28 and Comparative Example 1, the comparison between Example 29 and Comparative Example 2, and the comparison between Example 30 and Comparative Example 4, it can be seen that compared with the conventional PVP dispersant, the polymer dispersant in the present application has broad versatility, and can improve the dispersibility of the slurry using lithium iron phosphate with different graphitization degrees as the positive electrode active material, increase the solid content of the slurry, slow down the gel phenomenon of the slurry, reduce the film resistance of the electrode plate, improve the flexibility of the electrode plate, and improve the first coulombic efficiency and high temperature cycling performance of the battery. The polymer dispersant has universality for positive electrode slurries containing lithium iron phosphate with different graphitization degrees produced by different processes, thereby helping to reduce the preparation cost and improve the production efficiency.

From the comparison between Example 1 and Comparative Example 5, it can be seen that the amide group in the structural unit expressed by formula II in the polymer dispersant of the present application can effectively increase the solid content of the slurry, slow down the gel phenomenon of the slurry, improve the flexibility of the electrode plate, reduce the film resistance of the electrode plate, and improve the first coulombic efficiency and high temperature cycling performance of the battery. From the comparison between Examples 1-12 and Comparative Example 6, it can be seen that the X group that includes a carboxyl group, an ester group, a sulfo group, a sulfonate group, a phospho group or a phosphate group in

the polymer dispersant of the present application can effectively increase the solid content of the slurry, slow down the gel phenomenon of the slurry, improve the flexibility of the electrode plate, reduce the film resistance of the electrode plate, and improve the first coulombic efficiency and high temperature cycling performance of the battery.

From the comparison between Examples 1 and 9-10 and Example 5, it can be seen that compared with the X group that includes $-C_4H_8$-COO-$C_3H_7$, the X group that includes $-C_4H_8$-COOH, $-C_4H_g$-COO-$C_3H_6$-OH, or $-C_4H_8$-COO-NH-$C_3H_6$-OH in the polymer dispersant can further improve the dispersibility of the slurry, increase the solid content of the slurry, and improve the performance of the slurry in use. From the comparison between Example 1 and Examples 5 and 9-10, it can be seen that compared with the X group that includes $-C_4H_8$-COO-$C_3H_7$, $-C_4H_8$-COO-$C_3H_6$-OH, or $-C_4H_8$-COO-NH-$C_3H_6$-OH, the X group that includes $-C_4H_8$-COOH in the polymer dispersant can further improve the dispersion effect of the slurry, increase the solid content of the slurry, slow down the gel phenomenon of the slurry, improve the flexibility of the electrode plate, reduce the film resistance of the electrode plate, improve the performance of the slurry and the electrode plate in use, and improve the first coulombic efficiency and high temperature storage performance of the battery. From the comparison between Example 2 and Example 6, it can be seen that compared with the X group that includes $-C_4H_8-SO_3-C_3H_7$, the X group that includes $-C_4H_8-SO_3H$ in the polymer dispersant can further improve the dispersion effect of the slurry, increase the solid content of the slurry, slow down the gel phenomenon of the slurry, improve the flexibility of the electrode plate, reduce the film resistance of the electrode plate, and improve the first coulombic efficiency and high temperature cycling performance of the battery. From the comparison between Examples 4 and 11-12 and Example 8, it can be seen that compared with the polymer dispersant that includes

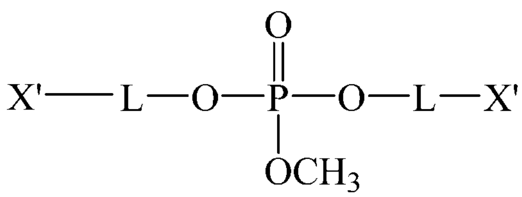
,

the polymer dispersant that includes

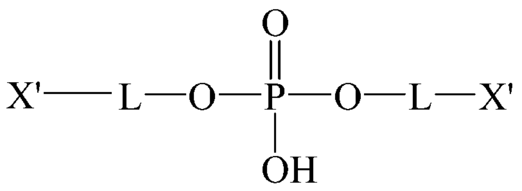
,
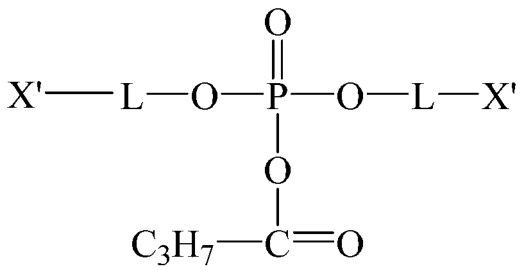
,

or

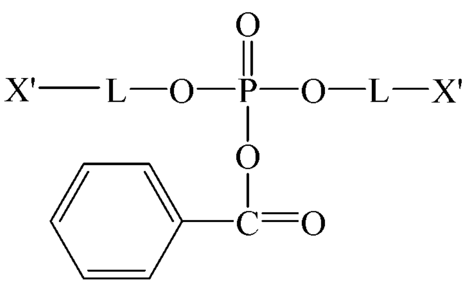

can further improve the flexibility of the electrode plate and improve the high temperature storage performance of the battery. From the comparison between Example 4 and Examples 8 and 11-12, it can be seen that compared with the polymer dispersant that includes

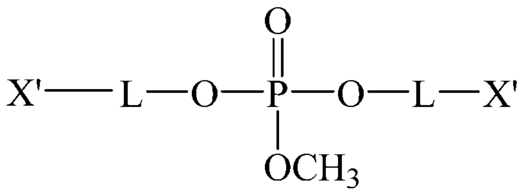

,

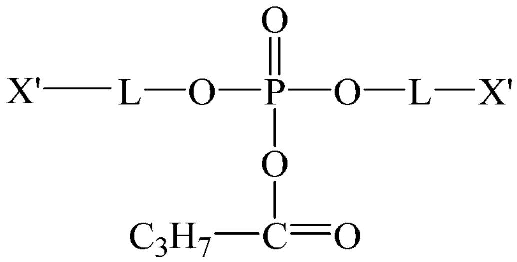

,

or

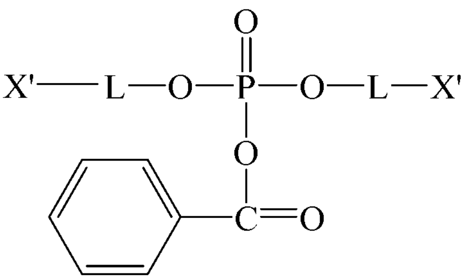

,

the polymer dispersant that includes

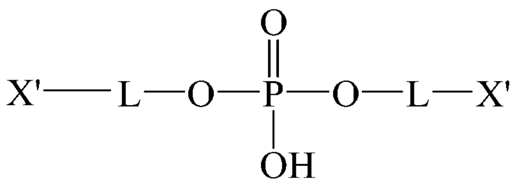

can further increase the solid content of the slurry, slow down the gel phenomenon of the slurry, improve the flexibility of the electrode plate, reduce the film resistance of the electrode plate, and improve the first coulombic efficiency and high temperature storage performance of the battery. From the comparison between Example 3 and Example 7, it can be seen that compared with the polymer that includes

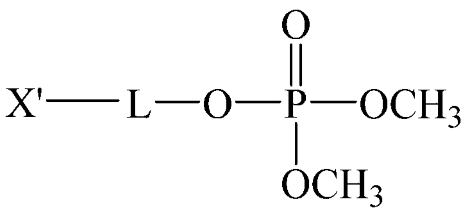

,

the polymer dispersant that includes

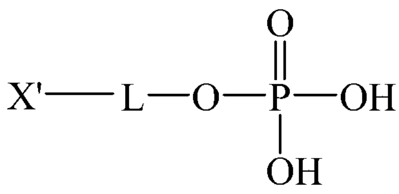

can further slow down the gel phenomenon of the slurry, improve the flexibility of the electrode plate, and improve the first coulombic efficiency and high temperature cycling performance of the battery. From the comparison between Example 8 and Example 7, it can be seen that compared with the polymer that includes

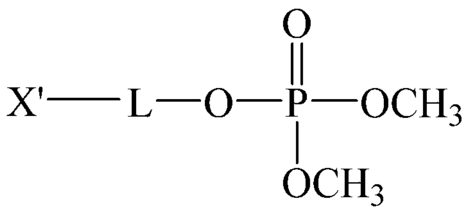

,

the polymer dispersant that includes

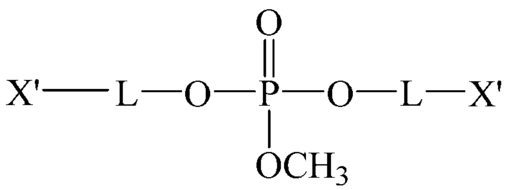

can improve the first coulombic efficiency and high temperature cycling performance of the battery, and improve the electrochemical performance of the battery. From the comparison between Example 4 and Example 3, it can be seen that compared with the dispersant that includes

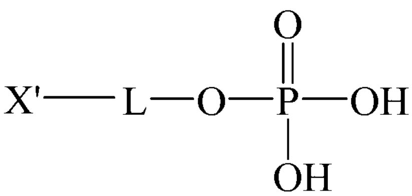

,

the polymer dispersant that includes

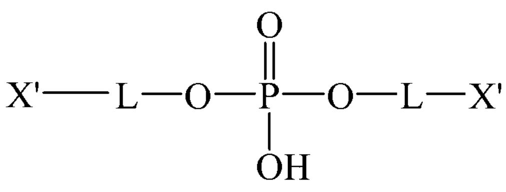

can further increase the solid content of the slurry, improve the flexibility of the electrode plate, and improve the first coulombic efficiency and high temperature storage performance of the battery.

From the comparison between Example 1 and Example 33, it can be seen that compared with $R_3$ in the structural unit expressed by formula II that includes a methyl group, $R_3$ that includes hydrogen can further improve the dispersibility of the slurry, increase the solid content of the slurry, slow down the gel phenomenon of the slurry, improve the flexibility of the electrode plate, reduce the film resistance of the electrode plate, and improve the first coulombic efficiency and high temperature storage performance of the battery.

From the comparison between Examples 1 and 13 and Examples 14 and 36, the comparison between Examples 1 and 16 and Examples 15 and 35, and the comparison between Example 15 and Example 34, it can be seen that $R_1$ and $R_2$ that include

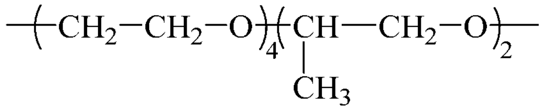

and

$$-\left(CH_2-CH_2-O\right)_4-$$

can increase the solid content of the slurry, slow down the gel phenomenon of the slurry, improve the flexibility of the electrode plate, and improve the first coulombic efficiency and high temperature storage performance of the battery. From the comparison between Example 1 and Examples 13-16 and 34-36, it can be seen that $R_1$ and $R_2$ that include

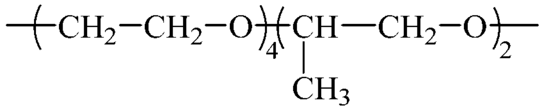

can further increase the solid content of the slurry, slow down the gel phenomenon of the slurry, improve the flexibility of the electrode plate, reduce the film resistance of the electrode plate, and improve the first coulombic efficiency and high temperature storage performance of the battery.

From Examples 1 and 17-22, it can be seen that the repetition number of the structural units expressed by formula II is 3-100, the slurry has high solid content, the electrode plate has excellent flexibility, and the battery has excellent first coulombic efficiency and high temperature storage performance. From the comparison between Examples 1, 18-19 and 21-22 and Examples 17 and 20, it can be seen that the repetition number of the structural units expressed by formula II being 8-80 can further increase the solid content of the slurry, slow down the gel phenomenon of the slurry, improve the flexibility of the electrode plate, and improve the performance of the slurry and the electrode plate in use. From the comparison between Examples 1 and 21-22 and Examples 17-20, it can be seen that the repetition number of the structural units expressed by formula II being 15-50 can further increase the solid content of the slurry, slow down the gel phenomenon of the slurry, improve the flexibility of the electrode plate, and improve the first coulombic efficiency and high temperature storage performance of the battery.

The positive electrode slurries of Examples 1-36 include a positive electrode active material, a conductive agent, a binder, and a dispersant, where the dispersant is the polymer in the present application, and the positive electrode active material includes lithium iron phosphate without a carbon coating layer on the surface, lithium iron phosphate with a carbon coating layer on the surface, or lithium nickel cobalt manganese with a carbon coating layer on the surface.

From the comparison between Example 1 and Example 32, it can be seen that compared with the positive electrode active material that is lithium nickel cobalt manganese with a carbon coating layer on the surface, the polymer dispersant in the present application is more applicable to lithium iron phosphate with a carbon coating layer on the surface, and can further increase the solid content of the slurry containing lithium iron phosphate with a carbon coating layer on the surface, improve the flexibility of the electrode plate, reduce the film resistance, and improve the performance of the slurry and the electrode plate in use.

From Examples 1 and 29-31, it can be seen that the polymer dispersant in the present application has universality and is applicable to slurry systems using lithium iron phosphate with a graphitization degree of 10%-30% as the positive electrode active material. From the comparison between Examples 1 and 29-31 and Example 28, it can be seen that using lithium iron phosphate with a graphitization degree of 10%-30% can further improve the flexibility of the electrode plate, reduce the film resistance of the electrode plate, and improve the performance of the electrode plate in use.

From Examples 1 and 23-27, it can be seen that when the mass fraction of the polymer dispersant is 0.01%-3% based on the total mass of solid materials in the positive electrode slurry, the slurry has high solid content, the electrode plate has excellent flexibility, and the battery has excellent first coulombic efficiency and high temperature storage performance. From the comparison between Examples 1 and 24-26 and Examples 23 and 27, it can be seen that the mass fraction of the polymer dispersant being 0.03% -2% based on the total mass of solid materials in the positive electrode slurry can improve the high temperature storage performance of the battery and broaden the operating temperature of the battery.

It should be noted that the present application is not limited to the embodiments above. The above-described embodiments are merely exemplary, and embodiments having substantially the same technical idea and the same effects within the scope of the technical solution of the present application are all included in the technical scope of the present application. In addition, other embodiments constructed by applying various modifications conceivable to those skilled in

the art to the embodiments and combining some of the constituent elements of the embodiments without departing from the scope of the essence of the present application are also included in the scope of the present application.

## Claims

1. A polymer, comprising a structure expressed by formula I,

$$X'-L-X$$ formula I,

wherein

X comprises at least one of a carboxyl group, an ester group, a sulfo group, a sulfonate group, a phospho group, and a phosphate group;
X' comprises a non-polar group; and
L comprises a structural unit expressed by formula II,

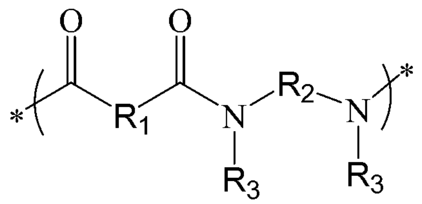
formula II,

wherein
$R_1$ comprises a $C_{1-12}$ alkylene group, a $C_{6-12}$ arylene group or

$$*\!-\!(EO)_{m1}\!-\!(PO)_{n1}\!-\!*$$ ;

$R_2$ comprises a $C_{1-12}$ alkylene group, a $C_{6-12}$ arylene group or

$$*\!-\!(EO)_{m2}\!-\!(PO)_{n2}\!-\!*$$ ,

wherein
EO represents $-CH_2-CH_2-O-$, PO represents $-CH(CH_3)-CH_2-O-$,
m1 and m2 are each independently an integer between 3 and 60, and n1 and n2 are each independently an integer between 0 and 60; and
$R_3$ comprises hydrogen or a $C_{1-3}$ alkyl group.

2. The polymer according to claim 1, wherein the polymer comprises at least one of structures expressed by formula I-1, formula I-2, formula I-3, and formula I-4,

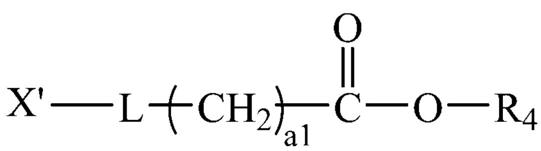
formula I-1

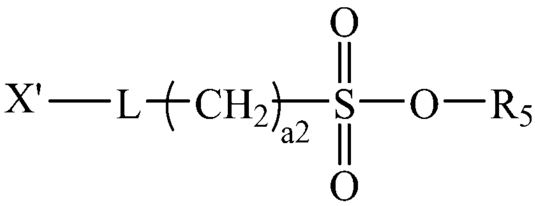

formula I-2

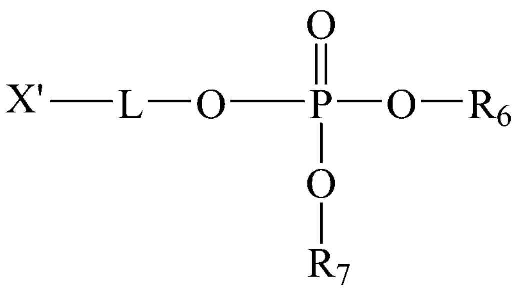

formula I-3

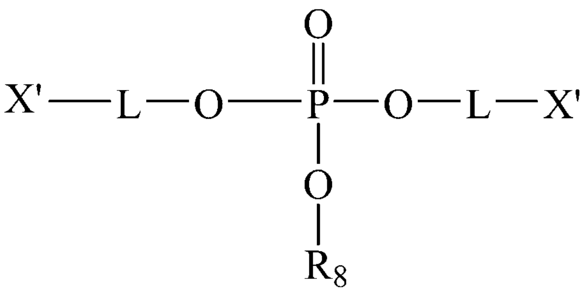

formula I-4,

wherein

a1 and a2 are each independently an integer between 2 and 12, $R_4$ and $R_5$ each independently comprise at least one of hydrogen, a $C_{1-12}$ alkyl group, a $C_{1-12}$ alkyl alcohol, and * -NH-$R_9$-OH, and $R_6$, $R_7$, and $R_8$ each independently comprise at least one of hydrogen, a $C_{1-12}$ alkyl group, a $C_{1-12}$ alkyl alcohol, *-NH-$R_{10}$-OH , and

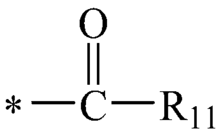

,

wherein $R_9$ and $R_{10}$ each independently comprise a $C_{1-12}$ alkyl group, and $R_{11}$ comprises a $C_{1-12}$ alkyl group or a $C_{6-30}$ aryl group.

**3.** The polymer according to claim 1 or 2, wherein the polymer comprises at least one of structures expressed by formula 1-1, formula I-2, and formula I-4,

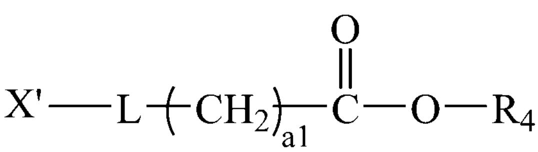

formula I-1

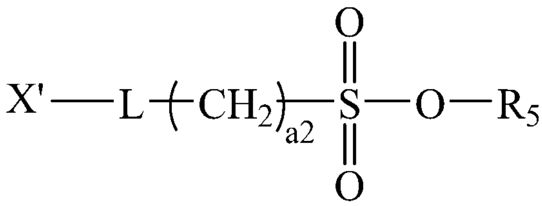

formula I-2

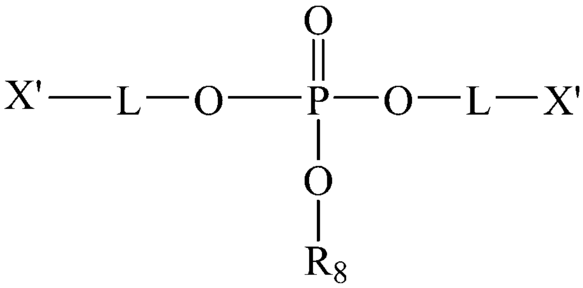

formula I-4,

wherein
a1 and a2 are each independently an integer between 2 and 12, $R_4$ and $R_5$ each independently comprise at least one of a $C_{1-12}$ alkyl alcohol and * -NH-$R_9$-OH , and $R_8$ comprises at least one of hydrogen, a $C_{1-12}$ alkyl alcohol, *-NH-$R_{10}$-OH, and

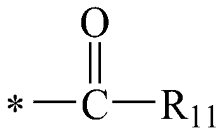
,

wherein $R_9$ and $R_{10}$ are each independently comprise a $C_{1-12}$ alkylene group, and $R_{11}$ comprises a $C_{1-12}$ alkyl group or a $C_{6-30}$ aryl group.

**4.** The polymer according to any one of claims 1 to 3, wherein $R_3$ in the structural unit expressed by formula II comprises hydrogen.

**5.** The polymer according to any one of claims 1 to 4, wherein $R_1$ comprises

$$*\!-\!(\text{EO})_{m1}\!-\!(\text{PO})_{n1}\!-\!*$$ ,

and $R_2$ comprises

$$*\!-\!(\text{EO})_{m2}\!-\!(\text{PO})_{n2}\!-\!*$$ ,

wherein n1 or n2 is 0, and m1 and m2 are each independently an integer between 3 and 60.

**6.** The polymer according to any one of claims 1 to 4, wherein $R_1$ comprises

$$*\!-\!(\text{EO})_{m1}\!-\!(\text{PO})_{n1}\!-\!*$$ ,

and $R_2$ comprises

$$* \left( EO \right)_{m2} \left( PO \right)_{n2} * ,$$

wherein
n1 and n2 are each independently an integer between 1 and 60, and m1 and m2 are each independently an integer between 3 and 30.

**7.** The polymer according to any one of claims 1 to 6, wherein a repetition number of the structural units expressed by formula II in L is 3-100.

**8.** The polymer according to any one of claims 1 to 7, wherein X' comprises at least one of a $C_{3-30}$ alkyl group and a $C_{6-30}$ aryl group.

**9.** The polymer according to any one of claims 1 to 8, wherein a weight average molecular weight of the polymer is 1500 g/mol-70000 g/mol.

**10.** The polymer according to any one of claims 1 to 9, wherein a glass transition temperature of the polymer is 50°C-200°C.

**11.** The polymer according to any one of claims 1 to 10, wherein a melting point of the polymer at one standard atmospheric pressure is 70°C-300°C.

**12.** The polymer according to any one of claims 1 to 11, wherein a hydrophilic-lipophilic balance value of the polymer is 6-16.

**13.** A preparation method for a polymer, comprising:

1) condensation reaction: polymerizing at least one diacid and at least one diamine to prepare an intermediate polymer, wherein the intermediate polymer comprises a structure expressed by formula III,

**Y'**—L—Y formula III,

wherein
Y' and Y each independently comprise a carboxyl group or an amino group; and
2) end group reaction: enabling end groups of the intermediate polymer to react to obtain a polymer comprising a structure expressed by formula I,

X'—L—X formula I,

wherein

X comprises at least one of a carboxyl group, an ester group, a sulfo group, a sulfonate group, a phospho group, and a phosphate group;
X' comprises a non-polar group; and
L comprises a structural unit expressed by formula II,

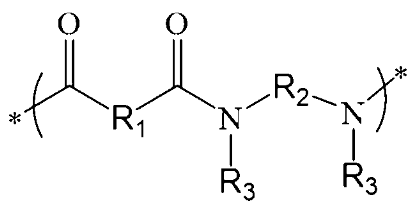
formula II,

wherein
$R_1$ comprises a $C_{1-12}$ alkylene group, a $C_{6-12}$ arylene group or

$$* \left( EO \right)_{m1} \left( PO \right)_{n1} * \quad ;$$

$R_2$ comprises a $C_{1-12}$ alkylene group, a $C_{6-12}$ arylene group or

$$* \left( EO \right)_{m2} \left( PO \right)_{n2} * \quad ,$$

wherein
EO represents -CH2-CH2-O-, PO represents -CH(CH3)-CH2-O-,
m1 and m2 are each independently an integer between 3 and 60, and n1 and n2 are each independently an integer between 0 and 60; and
$R_3$ comprises hydrogen or a $C_{1-3}$ alkyl group.

**14.** The preparation method according to claim 13, wherein the preparation method specifically comprises:

stirring a catalyst, at least one diacid, and at least one diamine at 20°C-300°C for reaction for 2 h-35 h to obtain the intermediate polymer, wherein two ends of the intermediate polymer have the same end group; and
enabling the end groups at the two ends of the intermediate polymer to respectively react to obtain the polymer.

**15.** A dispersant, comprising the polymer according to any one of claims 1 to 12 or the polymer prepared by the preparation method according to claim 13 or 14.

**16.** Application of the polymer according to any one of claims 1 to 12 to a secondary battery.

**17.** A positive electrode slurry, comprising a positive electrode active material, a conductive agent, a binder, and a dispersant, wherein the dispersant comprises the polymer according to any one of claims 1 to 12.

**18.** The positive electrode slurry according to claim 17, wherein the positive electrode active material comprises lithium iron phosphate with a carbon coating layer on a surface.

**19.** The positive electrode slurry according to claim 18, wherein a graphitization degree of lithium iron phosphate with the carbon coating layer on the surface is 10%-30%.

**20.** The positive electrode slurry according to any one of claims 17 to 19, wherein based on a total mass of solid materials in the positive electrode slurry, a mass fraction of the dispersant is 0.01%-3%, optionally 0.03%-2%.

**21.** A positive electrode plate, comprising a positive electrode current collector and a positive electrode film arranged on the positive electrode current collector, wherein the positive electrode film is prepared from the positive electrode slurry according to any one of claims 17 to 20.

**22.** A secondary battery, comprising a separator, a negative electrode plate, an electrolyte, and the positive electrode plate according to claim 21.

**23.** A power consuming apparatus, comprising the secondary battery according to claim 22.

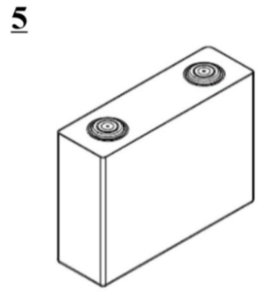


FIG. 1

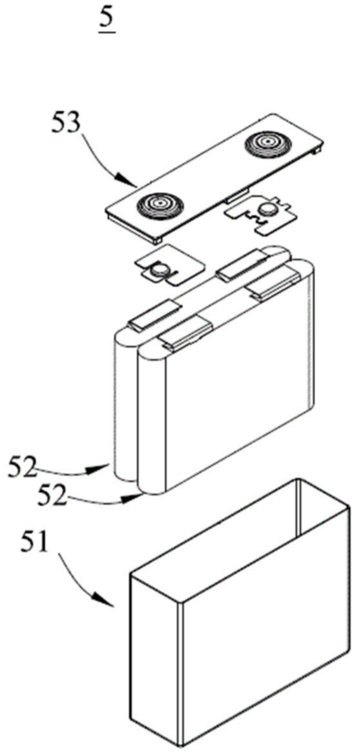


FIG. 2

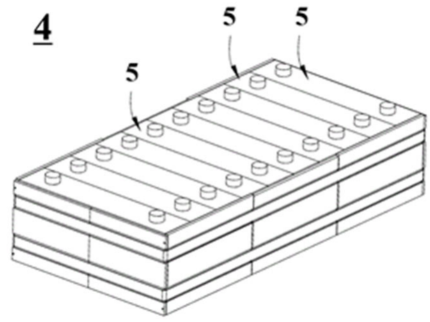


FIG. 3

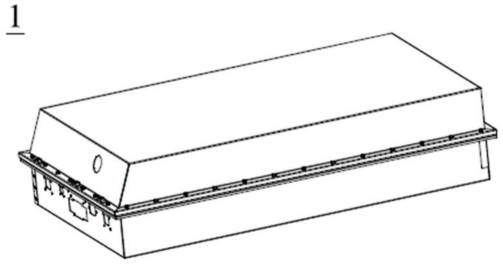


FIG. 4

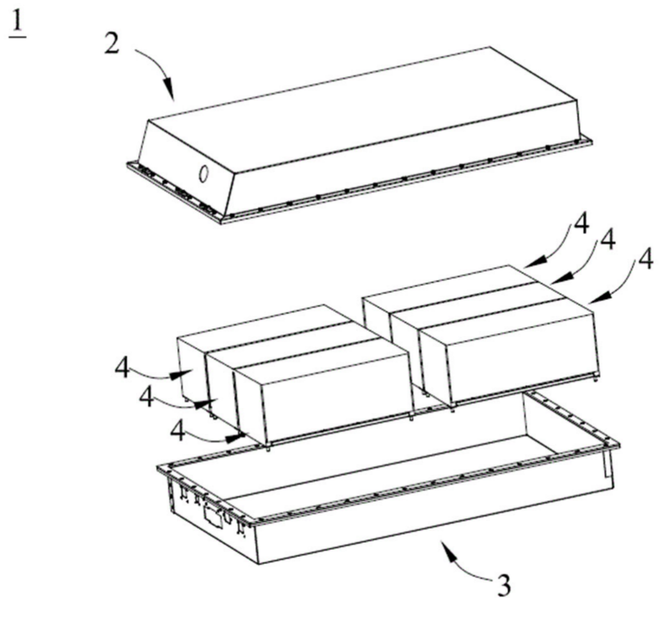


FIG. 5

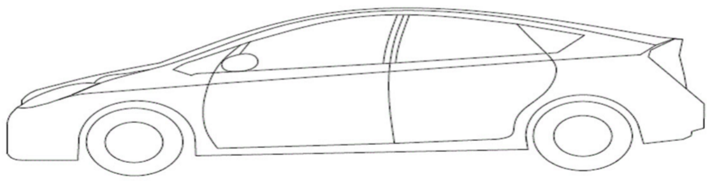

FIG. 6

**INTERNATIONAL SEARCH REPORT**

International application No.
**PCT/CN2023/133752**

**A. CLASSIFICATION OF SUBJECT MATTER**

C08G69/40(2006.01)i; C08G69/48(2006.01)i; H01M4/62(2006.01)i; H01M4/36(2006.01)i; H01M4/13(2010.01)i; H01M10/05(2010.01)i

According to International Patent Classification (IPC) or to both national classification and IPC

**B. FIELDS SEARCHED**

Minimum documentation searched (classification system followed by classification symbols)

IPC:C08G,H01M

Documentation searched other than minimum documentation to the extent that such documents are included in the fields searched

Electronic data base consulted during the international search (name of data base and, where practicable, search terms used)

CNKI, CNTXT, ENTXT(C), DWPI, ISI web of Science: 聚酰胺, PA, 尼龙, 二?醇, 二?酸, 端基, 封端, 末端, 羧基, 酯基, 磺酸基, 磺酸酯基, 磷酸基, 磷酸酯基, 分散, 正极, 浆料, 电池, polyamide, PA, nylon, +ol, acid, end group, cap+, carboxyl, ester, sulfonic acid, sulfonate, phosphoric acid, phosphate ester, dispers+, cathode, slurry, battery

**C. DOCUMENTS CONSIDERED TO BE RELEVANT**

| Category* | Citation of document, with indication, where appropriate, of the relevant passages | Relevant to claim No. |
|---|---|---|
| PX | CN 116589676 A (CONTEMPORARY AMPEREX TECHNOLOGY CO., LTD.) 15 August 2023 (2023-08-15)<br>claims | 1-23 |
| X | CN 1238678 A (UNION CAMP CORP.; BUSH BOOKER ALAN) 15 December 1999 (1999-12-15)<br>claim 43 | 1, 4, 7-8 |
| X | CN 1280817 A (L'OREAL) 24 January 2001 (2001-01-24)<br>description, page 3, lines 10-28 | 1, 4, 7-8 |
| X | US 5783657 A (UNION CAMP CORP.) 21 July 1998 (1998-07-21)<br>claim 1 | 1, 4, 7-8 |
| A | US 2003065084 A1 (ARIZONA CHEMICAL COMPANY) 03 April 2003 (2003-04-03)<br>entire document | 1-23 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 April 2024** | **03 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2023/133752**

| Patent document cited in search report | | | Publication date (day/month/year) | Patent family member(s) | | | Publication date (day/month/year) |
|---|---|---|---|---|---|---|---|
| CN | 116589676 | A | 15 August 2023 | CN | 116589676 | B | 22 December 2023 |
| CN | 1238678 | A | 15 December 1999 | KR | 20000049273 | A | 25 July 2000 |
| | | | | KR | 100801953 | B1 | 12 February 2008 |
| | | | | ES | 2260802 | T3 | 01 November 2006 |
| | | | | EP | 1027032 | A1 | 16 August 2000 |
| | | | | EP | 1027032 | A4 | 14 August 2002 |
| | | | | EP | 1027032 | B1 | 08 March 2006 |
| | | | | US | 6242509 | B1 | 05 June 2001 |
| | | | | DE | 69735435 | D1 | 04 May 2006 |
| | | | | DE | 69735435 | T2 | 14 September 2006 |
| | | | | BR | 9712342 | A | 31 October 2000 |
| | | | | WO | 9817243 | A1 | 30 April 1998 |
| | | | | JP | 2002516619 | A | 04 June 2002 |
| | | | | AU | 5147098 | A | 15 May 1998 |
| | | | | AU | 727577 | B2 | 14 December 2000 |
| | | | | JP | 2006152269 | A | 15 June 2006 |
| | | | | CA | 2268474 | A1 | 30 April 1998 |
| | | | | CA | 2268474 | C | 29 September 2009 |
| | | | | ATE | 319419 | T1 | 15 March 2006 |
| CN | 1280817 | A | 24 January 2001 | US | 6402408 | B1 | 11 June 2002 |
| | | | | BR | 0003289 | A | 13 March 2001 |
| | | | | FR | 2796273 | A1 | 19 January 2001 |
| | | | | FR | 2796273 | B1 | 12 September 2003 |
| | | | | DE | 60000121 | D1 | 16 May 2002 |
| | | | | DE | 60000121 | T2 | 19 September 2002 |
| | | | | ATE | 215807 | T1 | 15 April 2002 |
| | | | | JP | 2001081320 | A | 27 March 2001 |
| | | | | JP | 3466138 | B2 | 10 November 2003 |
| | | | | ES | 2174805 | T3 | 16 November 2002 |
| | | | | EP | 1068855 | A1 | 17 January 2001 |
| | | | | EP | 1068855 | B1 | 10 April 2002 |
| | | | | CN | 1188100 | C | 09 February 2005 |
| US | 5783657 | A | 21 July 1998 | JP | 2009120856 | A | 04 June 2009 |
| | | | | CA | 2268452 | A1 | 30 April 1998 |
| | | | | CA | 2268452 | C | 01 August 2006 |
| | | | | US | 6111055 | A | 29 August 2000 |
| | | | | TW | 385321 | B | 21 March 2000 |
| | | | | AU | 5091998 | A | 15 May 1998 |
| | | | | AU | 727433 | B2 | 14 December 2000 |
| | | | | JP | 2001502742 | A | 27 February 2001 |
| | | | | JP | 4005640 | B2 | 07 November 2007 |
| | | | | WO | 9817705 | A1 | 30 April 1998 |
| | | | | US | 5998570 | A | 07 December 1999 |
| | | | | DE | 69730144 | D1 | 09 September 2004 |
| | | | | DE | 69730144 | T2 | 11 August 2005 |
| | | | | JP | 2007204762 | A | 16 August 2007 |
| | | | | JP | 4703599 | B2 | 15 June 2011 |
| | | | | EP | 0939782 | A1 | 08 September 1999 |
| | | | | EP | 0939782 | A4 | 15 December 1999 |
| | | | | EP | 0939782 | B1 | 04 August 2004 |

Form PCT/ISA/210 (patent family annex) (July 2022)

**INTERNATIONAL SEARCH REPORT**
**Information on patent family members**

International application No.
**PCT/CN2023/133752**

| Patent document cited in search report | Publication date (day/month/year) | Patent family member(s) | Publication date (day/month/year) |
|---|---|---|---|
| | | EP 1696022 A1 | 30 August 2006 |
| US 2003065084 A1 | 03 April 2003 | KR 20050018675 A | 23 February 2005 |
| | | KR 100979082 B1 | 31 August 2010 |
| | | WO 03095524 A1 | 20 November 2003 |
| | | US 2009130041 A1 | 21 May 2009 |
| | | US 8013021 B2 | 06 September 2011 |
| | | US 6870011 B2 | 22 March 2005 |
| | | ES 2612130 T3 | 12 May 2017 |
| | | JP 2005524745 A | 18 August 2005 |
| | | JP 4358103 B2 | 04 November 2009 |
| | | US 2005165212 A1 | 28 July 2005 |
| | | US 7745546 B2 | 29 June 2010 |
| | | EP 1504050 A1 | 09 February 2005 |
| | | EP 1504050 B1 | 16 November 2016 |
| | | JP 2006213929 A | 17 August 2006 |
| | | AU 2003229027 A1 | 11 November 2003 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310864261